# EUROPEAN PATENT APPLICATION

(11) **EP 4 621 877 A1**
(43) Date of publication of application: **24.09.2025**
(21) Application number: 25722459.2
(22) Date of filing: 15.01.2025
(51) Int. Cl.: H01M 4/36

(54) **NEGATIVE ELECTRODE ACTIVE MATERIAL AND PREPARATION METHOD THEREFOR, NEGATIVE ELECTRODE SHEET, LITHIUM-ION BATTERY, AND ELECTRIC DEVICE**

(30) Priority: 30.01.2024 CN 202410129306
(71) Applicant: Contemporary Amperex Technology (Hong Kong) Limited, Hong Kong (HK)
(72) Inventor: BAI, Peiming, Ningde, Fujian 352100 (CN); KANG, Meng, Ningde, Fujian 352100 (CN)
(74) Representative: Jacob, Reuben Ellis
(86) International application number: PCT/CN2025/072519
(87) International publication number: WO 2025/161967

(57) **Abstract**

The present application discloses a negative electrode active material and a preparation method therefor, a negative electrode plate, a lithium-ion battery, and an electrical apparatus, wherein the lithium-ion battery comprises one or more battery cells, the battery cell comprises a negative electrode plate, the negative electrode plate comprises a negative electrode current collector and a negative electrode film layer located on at least one surface of the negative electrode current collector, the negative electrode film layer comprises a negative electrode active material, the negative electrode active material comprises an inner core and a coating layer located on at least a part of the surface of the inner core, the inner core comprises graphite, the coating layer comprises hard carbon; and in a cumulative distribution curve of R values of the negative electrode active material obtained under a surface scanning mode of a laser microscopic confocal Raman spectrometer, the R value R50, which corresponds to a cumulative distribution of 50%, from the lower limit is 0.15-0.40. The negative electrode active material provided in the present application can enable the battery to have high energy density, good kinetic performance, and good cycling performance.

## Description

### CROSS-REFERENCE TO RELATED APPLICATION

The present application claims priority to Chinese Patent Application No. 202410129306.0 titled "NEGATIVE ELECTRODE ACTIVE MATERIAL AND PREPARATION METHOD THEREFOR, NEGATIVE ELECTRODE PLATE COMPRISING THE SAME, BATTERY, AND ELECTRICAL APPARATUS" filed on 30 January 2024, the entire content of which is incorporated herein by reference.

### TECHNICAL FIELD

The present application relates to a negative electrode active material and a preparation method therefor, a negative electrode plate, a lithium-ion battery, and an electrical apparatus.

### BACKGROUND

With the continuous expansion of battery application fields, people have increasingly higher requirements for fast charge performance of batteries. A negative electrode serves as an important component of a battery, and its performance will affect overall performance of the battery. At present, a commonly used negative electrode active material for the negative electrode is graphite, but the fast charge performance of graphite is usually not excellent enough. On this basis, at present, a fast-charging negative electrode active material, such as fast-charging hard carbon, has been developed. A battery assembled from fast-charging hard carbon generally has low energy density, and its cycle life is not excellent enough, thereby restricting its practical application. Therefore, how to enable a battery to have good fast charge performance and cycling performance under the premise of having high energy density is still a difficulty in current battery development. The above description is merely intended to provide background art information related to the present application, and does not necessarily constitute the prior art.

### SUMMARY OF THE INVENTION

The present application provides a negative electrode active material and a preparation method therefor, a negative electrode plate, a lithium-ion battery, and an electrical apparatus, which can enable a battery to have high energy density, good kinetic performance, and good cycling performance.

In a first aspect, the present application provides a lithium-ion battery, comprising one or more battery cells. The battery cell comprises a negative electrode plate, the negative electrode plate comprises a negative electrode current collector and a negative electrode film layer located on at least one surface of the negative electrode current collector, the negative electrode film layer comprises a negative electrode active material, the negative electrode active material comprises an inner core and a coating layer located on at least a part of the surface of the inner core, the inner core comprises graphite, the coating layer comprises hard carbon; and in a cumulative distribution curve of R values of the negative electrode active material obtained under a surface scanning mode of a laser microscopic confocal Raman spectrometer, the R value R50, which corresponds to a cumulative distribution of 50%, from the lower limit is 0.15-0.40.

The R value of the negative electrode active material can represent a defect degree and a disorder degree of the negative electrode active material. the R value R50, which corresponds to a cumulative distribution of 50%, of the negative electrode active material is 0.15-0.40, which not only can improve charge exchange capacity of ions on the surface of the negative electrode active material, but also can reduce side reactions on surfaces of particles of the negative electrode active material to a low level. Therefore, the negative electrode active material provided in embodiments of the present application can enable the battery to have high energy density, good kinetic performance, and good cycling performance.

In some embodiments, the R value R50, which corresponds to a cumulative distribution of 50%, of the negative electrode active material is 0.20-0.30, thereby enabling the battery to better have high energy density, good kinetic performance, and good cycling performance.

In some embodiments, among all of the obtained R values of the negative electrode active material, a proportion of the number of R values smaller than the R value R50, which corresponds to a cumulative distribution of 50%, of the inner core is smaller than or equal to 10%. Optionally, among all of the obtained R values of the negative electrode active material, the proportion of the number of R values smaller than the R value R50, which corresponds to a cumulative distribution of 50%, of the inner core is smaller than or equal to 6%.

The smaller the value is, the smaller the uncoating degree of the negative electrode active material is, and isotropy degree of the negative electrode active material is improved. In this case, the negative electrode active material has more active sites, and thus the ions on the surface of the negative electrode active material have better charge exchange capacity, thereby further improving the kinetic performance of the negative electrode active material and the battery. In addition, the small uncoating degree of the negative electrode active material can further reduce a co-intercalation phenomenon of the solvent in the electrolyte solution during cycling, and then can further enable the battery to have better cycling performance.

In some embodiments, the R value R50, which corresponds to a cumulative distribution of 50%, of the inner core is smaller than the R value R50, which corresponds to a cumulative distribution of 50%, of the coating layer.

A large the R value R50, which corresponds to a cumulative distribution of 50%, and a large disorder degree of the coating layer of the negative electrode active material can enable the negative electrode active material and the battery to have good kinetic performance; while a small the R value R50, which corresponds to a cumulative distribution of 50%, and a small disorder degree of the inner core of the negative electrode active material can enable the whole negative electrode active material to have high gram capacity, and enable the battery to have high energy density.

In some embodiments, the R value R50, which corresponds to a cumulative distribution of 50%, of the coating layer is 0.9-1.4. Within the above range of the R value R50, which corresponds to a cumulative distribution of 50%, of the coating layer, the coating layer itself has good kinetic performance, not only can improve the kinetic performance of the negative electrode active material and the battery; but also can further enable the negative electrode active material to have a small specific surface area, thereby reducing side reactions of the battery, and enabling the battery to have good cycling performance.

In some embodiments, the R value R50, which corresponds to a cumulative distribution of 50%, of the inner core is 0.06-0.13. the R value R50, which corresponds to a cumulative distribution of 50%, of the inner core within the above range can enable the battery to have both high energy density and good kinetic performance.

In some embodiments, the mass of the coating layer is 0.3%-4.5%, optionally 1%-3.2%, of the mass of the inner core. The mass proportion of the coating layer within the above range is conducive to enabling the battery to have high energy density, good kinetic performance, and long cycle life.

In some embodiments, a difference value between a volume distribution particle size Dv50 of the negative electrode active material and a volume distribution particle size Dv50 of the inner core is 1 µm-5.5 µm; and optionally 1.5 µm-4.2 µm. The difference value between the volume distribution particle size Dv50 of the negative electrode active material and the volume distribution particle size Dv50 of the inner core within the above range not only can improve charge exchange capacity of the ions on the surface of the negative electrode active material, but also can reduce the side reactions on the surfaces of the particles of the negative electrode active material to a low level, and can further enable the negative electrode active material to have high gram capacity, which is thus conductive to enabling the battery to have high energy density, good kinetic performance, and long cycle life.

In some embodiments, the volume distribution particle size Dv50 of the negative electrode active material is 8 µm-25 µm, and optionally 12 µm-17 µm. The volume distribution particle size Dv50 of the negative electrode active material within the above range not only can enable lithium ions to have good solid-phase conductivity inside the particles of the negative electrode active material, but also can enable the negative electrode active material to have a small specific surface area, which is thus conductive to enabling the battery to have both good cycling performance and good kinetic performance. The volume distribution particle size Dv50 of the negative electrode active material within the above range can further enable the negative electrode slurry to have good dispersity.

In some embodiments, the graphite is artificial graphite. The inner core comprises artificial graphite, which enables the battery to have high energy density and good cycling performance.

In some embodiments, the graphite has secondary particle morphology. When the graphite has secondary particle morphology, the isotropy degree of the graphite increases, which is conducive to fast intercalation of the lithium ions, is then conducive to enabling the battery to have good kinetic performance, and can further improve the gram capacity of the negative electrode active material and the energy density of the battery.

In some embodiments, an intensity ratio C(004)/C(110) of the 004 crystal plane diffraction peak to the 110 crystal plane diffraction peak of the graphite measured by X-ray diffraction is 5.5-6.5.

In some embodiments, the negative electrode active material has a gram capacity of 354 mAh/g-361 mAh/g.

In some embodiments, the negative electrode active material has a powder compacted density of 1.68 g/cm³-1.78 g/cm³ under a pressure of 20,000 N.

In some embodiments, the negative electrode active material has a specific surface area of 1.5 m²/g-4.5 m²/g.

In some embodiments, the negative electrode film layer comprises a first negative electrode film layer and a second negative electrode film layer located between the first negative electrode film layer and the negative electrode current collector, the thickness of the first negative electrode film layer is 30%-60% of the thickness of the negative electrode film layer, the first negative electrode film layer comprises a first negative electrode active material, the second negative electrode film layer comprises a second negative electrode active material, and the first negative electrode active material comprises the negative electrode active material according to any one of the above embodiments.

In some embodiments, the second negative electrode active material comprises the negative electrode active material according to any one of the above embodiments, and the mass content w1 of the first negative electrode active material in the first negative electrode film layer is larger than the mass content w2 of the second negative electrode active material in the second negative electrode film layer, thereby reducing the problem of the negative electrode binder floating during slurry drying, and reducing content of the negative electrode binder on an outer surface of the negative electrode film layer, which is thus conductive to liquid-phase conduction of ions inside a porous negative electrode and charge exchange of the ions on the surface of the negative electrode active material, and then can further improve the kinetic performance of the battery.

Optionally, the mass content w1 of the first negative electrode active material in the first negative electrode film layer is larger than or equal to 96.9%, and the mass content w2 of the second negative electrode active material in the second negative electrode film layer is smaller than 96.9%.

In some embodiments, the second negative electrode active material comprises graphite, the graphite has secondary particle morphology, and the R value R50, which corresponds to a cumulative distribution of 50%, of the graphite is 0.06-0.13.

Optionally, the mass content w1 of the first negative electrode active material in the first negative electrode film layer is larger than the mass content w2 of the second negative electrode active material in the second negative electrode film layer.

Optionally, the mass content w1 of the first negative electrode active material in the first negative electrode film layer is larger than or equal to 96.9%, and the mass content w2 of the second negative electrode active material in the second negative electrode film layer is smaller than 96.9%.

Accordingly, the problem of the negative electrode binder floating during slurry drying is reduced, and the content of the negative electrode binder on the outer surface of the negative electrode film layer is reduced, which is thus conductive to liquid-phase conduction of ions inside a porous negative electrode and charge exchange of the ions on the surface of the negative electrode active material, and then can further improve the kinetic performance of the battery.

In some embodiments, compacted density of the negative electrode film layer is 1.62 g/cm³-1.80 g/cm³, and optionally 1.65 g/cm³-1.80 g/cm³.

In some embodiments, the thickness of the negative electrode film layer is 45 µm-100 µm, and optionally 70 µm-100 µm. Regulating the thickness of the negative electrode film layer within the above range is conducive to enabling the battery to have better kinetic performance under the premise of having high energy density.

In a second aspect, the present application provides an electrical apparatus, comprising the lithium-ion battery in the first aspect of the present application, wherein the lithium-ion battery is configured to provide electrical energy.

The electrical apparatus in the present application comprises the lithium-ion battery provided in the present application, and thus at least has same advantages as the lithium-ion battery.

In a third aspect, the present disclosure provides a negative electrode active material, comprising an inner core and a coating layer located on at least a part of the surface of the inner core, the inner core comprises graphite, the coating layer comprises hard carbon; and in a cumulative distribution curve of R values of the negative electrode active material obtained under a surface scanning mode of a laser microscopic confocal Raman spectrometer, the R value R50, which corresponds to a cumulative distribution of 50%, from the lower limit is 0.15-0.40.

In a fourth aspect, the present application provides a method for preparing a negative electrode active material, including the following steps: providing a coke raw material; crushing, shaping, and grading the coke raw material to obtain an aggregate; mixing the resulting aggregate with a binder, successively granulating and graphitizing the mixture to obtain graphite; performing solid-liquid fusion on the resulting graphite and a liquid-phase hard carbon coating agent; and carbonizing the solid-liquid fusion product in a protective gas atmosphere, so that the liquid-phase hard carbon coating agent is carbonized into hard carbon and coats at least a part of the surface of the graphite, to obtain a negative electrode active material, wherein the negative electrode active material comprises an inner core and a coating layer located on at least a part of the surface of the inner core, the inner core comprises graphite, the coating layer comprises hard carbon; and in a cumulative distribution curve of R values of the negative electrode active material obtained under a surface scanning mode of a laser microscopic confocal Raman spectrometer, the R value R50, which corresponds to a cumulative distribution of 50%, from the lower limit is 0.15-0.40.

In the preparation method provided in embodiments of the present application, solid-liquid fusion is performed on the graphite with a liquid-phase hard carbon coating agent. Because of having good fluidity, the liquid-phase hard carbon coating agent can be uniformly distributed on surfaces of graphite particles, thereby improving the coating effects of the coating layer, and reducing the uncoating degree; and the carbonized liquid-phase hard carbon coating agent can enable the negative electrode active material to have a small R50, thereby improving charge exchange capacity of ions on the surface of the negative electrode active material, and improving the kinetic performance of the negative electrode active material and the battery. Reducing the uncoating degree of the negative electrode active material can further reduce side reactions on surfaces of particles of the negative electrode active material to a low level, and is then conductive to enabling the battery to have good cycling performance. Therefore, the negative electrode active material prepared using the preparation method provided in embodiments of the present application can enable the battery to have high energy density, good kinetic performance, and good cycling performance.

In some embodiments, the coke raw material comprises one or more of a petroleum-based needle coke and a coal-based needle coke. These coke raw materials are anisotropic materials, which are conductive to reducing the disorder degree of the inner core material, and improving the gram capacity of the inner core material and the overall gram capacity of the negative electrode active material.

In some embodiments, the graphitization is at a temperature of 2,800°C-3,800°C, and optionally 2,850°C-3,300°C. An appropriate graphitization temperature is selected, thereby enabling the battery to have both high energy density and good kinetic performance.

In some embodiments, the mass of the liquid-phase hard carbon coating agent is 0.7%-10%, and optionally 3%-7%, of the mass of the graphite. Mass proportion of the liquid-phase hard carbon coating agent within the above range can reduce the uncoating degree of the negative electrode active material to a small range, thereby improving the charge exchange capacity of the ions on the surface of the resulting negative electrode active material, reducing the side reactions on the surfaces of the particles of the resulting negative electrode active material to a low level, and further enabling the resulting negative electrode active material to have high gram capacity, which is conductive to enabling the battery to have high energy density, good kinetic performance, and long cycle life.

In some embodiments, the liquid-phase hard carbon coating agent comprises a liquid resin with a viscosity of 150 mPa·s-2,000 mPa·s at 25°C and a solid content of 50%-85%.

Optionally, the liquid resin has a viscosity of 300 mPa·s-900 mPa·s at 25°C and a solid content of 60%-82%.

The viscosity of the liquid resin within the above range can enable the liquid resin to have not only good fluidity and diffusivity, but also good curing effects and coating effects. Therefore, the liquid resin can be uniformly dispersed on the surfaces of the graphite particles, which is conductive to improving the coating effects, reducing the uncoating degree, and further improving the uniformity of coating con the surfaces of the graphite particles, and is then conductive to enabling the battery to have both good kinetic performance and long cycle life.

The solid content of the liquid resin within the above range can enable the liquid resin to have not only good fluidity and diffusivity, but also good curing effects and coating effects. Therefore, the liquid resin can be uniformly dispersed on the surfaces of the graphite particles, which is conductive to improving the coating effects, reducing the uncoating degree, further regulating the R value R50, which corresponds to a cumulative distribution of 50%, of the negative electrode active material, increasing the disorder degree on the surfaces of the particles of the negative electrode active material, and improving the charge exchange capacity of the ions on the surface of the negative electrode active material, and is then conductive to enabling the battery to have good kinetic performance and long cycle life.

In some embodiments, the liquid resin includes at least one of liquid phenolic resin, liquid epoxy resin, liquid vinyl ester resin, liquid unsaturated polyester resin, liquid furan resin, and respective derivatives thereof.

In some embodiments, the liquid-phase hard carbon coating agent comprises liquid phenolic resin, and the liquid phenolic resin has a solid content of 60%-82% and a weight average molecular weight of 300-800.

Optionally, the liquid phenolic resin has a solid content of 68%-78% and a weight average molecular weight of 450-700.

Compared to other liquid resins, the hard carbon formed by carbonization and coking of the liquid phenolic resin itself has better performance.

Further regulating the solid content and the weight average molecular weight of the liquid phenolic resin within the above range can enable the hard carbon formed by carbonization to have better kinetic performance, can further improve the coating effects, and can reduce the uncoating degree, thereby improving the charge exchange capacity of the ions on the surface of the negative electrode active material, and improving the kinetic performance of the negative electrode active material.

In some embodiments, a device for performing solid-liquid fusion on the graphite and the liquid-phase hard carbon coating agent is a fusion machine at a stirring speed of 350 r/min-1,000 r/min for a solid-liquid fusion stirring duration of 4 min-10 min. Optionally, the fusion machine is at a stirring speed of 450 r/min-850 r/min for a solid-liquid fusion stirring duration of 6 min-8 min. Increasing the stirring speed of the fusion machine is conductive to improving the coating effects, and reducing the uncoating degree, thereby improving the charge exchange capacity of the ions on the surface of the negative electrode active material, and improving the kinetic performance of the negative electrode active material. Increasing the solid-liquid fusion stirring duration is conductive to improving the coating effects and reducing the uncoating degree, thereby improving the charge exchange capacity of the ions on the surface of the negative electrode active material, and improving the kinetic performance of the negative electrode active material.

In some embodiments, the carbonization is performed at a holding temperature of 900°C-1,500°C.

In some embodiments, the carbonization is performed for a temperature holding duration of 2 h-10 h.

In a fifth aspect, the present application provides a negative electrode plate, comprising a negative electrode current collector and a negative electrode film layer located on at least one surface of the negative electrode current collector, wherein the negative electrode film layer comprises a negative electrode active material, the negative electrode active material comprises an inner core and a coating layer located on at least a part of the surface of the inner core, the inner core comprises graphite, the coating layer comprises hard carbon; and in a cumulative distribution curve of R values of the negative electrode active material obtained under a surface scanning mode of a laser microscopic confocal Raman spectrometer, the R value R50, which corresponds to a cumulative distribution of 50%, from the lower limit is 0.15-0.40.

### BRIEF DESCRIPTION OF DRAWINGS

In order to more clearly illustrate technical solutions of embodiments of the present application, drawings to be used in the embodiments of the present application will be briefly introduced below. Apparently, the drawings described below are merely some embodiments of the present application. For those of ordinary skills in the art, other drawings may be further obtained based on these drawings without creative work.
FIG. 1 is a schematic diagram of a battery cell provided in some embodiments of the present application.
FIG. 2 is a schematic diagram of a battery module provided in some embodiments of the present application.
FIG. 3 is a schematic diagram of a battery pack provided in some embodiments of the present application.
FIG. 4 is a schematic exploded view of the battery pack shown in FIG. 3.
FIG. 5 is a schematic exploded view of a battery cell provided in some embodiments of the present application.
FIG. 6 is a schematic diagram of an electrical apparatus provided in some embodiments of the present application.

In the drawings, the figures may not be drawn to the actual scale.

Description of reference numerals: 1. battery pack; 2. upper box; 3. lower box; 4. battery module; 5. battery cell; 51. case; 52. electrode assembly; 53. cover plate.

### DETAILED DESCRIPTION

A negative electrode active material and a preparation method therefor, a negative electrode plate, a lithium-ion battery, and an electrical apparatus in embodiments of the present application are specifically disclosed below with reference to the detailed description of the drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise particularly stated, all steps in the present application may be performed sequentially or may be performed randomly, and are preferably performed sequentially. For example, the method includes steps (a) and (b), which means that the method may include steps (a) and (b) performed sequentially, or may include steps (b) and (a) performed sequentially. For example, reference to the method may further include step (c), which means that step (c) may be added to the method in any order, e.g., the method may include steps (a), (b), and (c), or may include steps (a), (c), and (b), or may include steps (c), (a), and (b).

The "plurality of" mentioned in the present application refers to two or more than two.

Unless otherwise stated, the terms used in the present application have the well-known meanings as commonly understood by those skilled in the art.

Unless otherwise stated, values of parameters mentioned in the present application may be measured using various test methods commonly used in the art. For example, they may be measured according to the test methods given in the embodiments of the present application. Unless otherwise stated, the test temperature of each parameter is 25°C.

The battery mentioned in the embodiments of the present application may be a single physical module including one or more battery cells to provide higher voltage and capacity. For example, the battery mentioned in the present application may include, e.g., a battery cell, a battery module, or a battery pack.

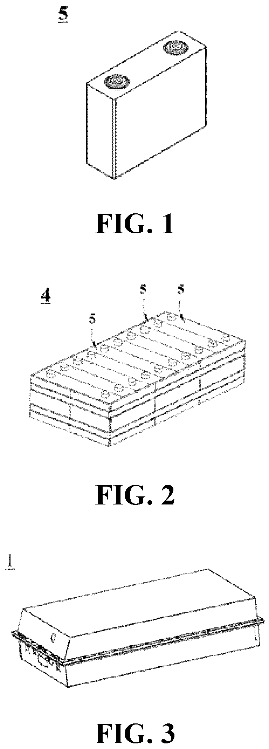

The battery cell is a smallest unit constituting a battery, and can implement charging and discharging functions by itself. The battery cell may be, e.g., a cylinder, a cuboid, or other shape, which is not limited in the embodiments of the present application. FIG. 1 is a battery cell 5 with a cuboid structure as an example.

When there are a plurality of battery cells, the plurality of battery cells are connected by series connection, or parallel connection, or parallel-series connection through a bus component. **In** some embodiments, the battery may be a battery module. When there are a plurality of battery cells, the plurality of battery cells are arranged and fixed to form a battery module. **In** some embodiments, the battery may be a battery pack. The battery pack comprises a box body and a battery cell. The battery cell or the battery module is accommodated in the box body. **In** some embodiments, the box body may be a part of a vehicle chassis structure. For example, a part of the box body may become at least a part of a bottom plate of a vehicle, or a part of the box body may become at least a part of a cross beam and a longitudinal beam of a vehicle.

In some embodiments, the battery may be an energy storage apparatus. The energy storage apparatus includes, e.g., an energy storage container or an energy storage cabinet.

In some embodiments, the battery cells may be assembled into a battery module, the number of battery cells comprised in the battery module may be one or more, and the specific number may be regulated based on the application and capacity of the battery module. FIG. 2 is a schematic diagram of a battery module 4 as an example. As shown in FIG. 2, in the battery module 4, a plurality of battery cells 5 may be arranged sequentially along a length direction of the battery module 4, or, of course, may be arranged in any other manner. Furthermore, the plurality of battery cells 5 may be fixed by fasteners.

Optionally, the battery module 4 may further comprise a shell having an accommodating space, in which the plurality of battery cells 5 are accommodated.

In some embodiments, the above battery modules may be further assembled into a battery pack, and the number of battery modules comprised in the battery pack may be regulated based on the application and capacity of the battery pack.

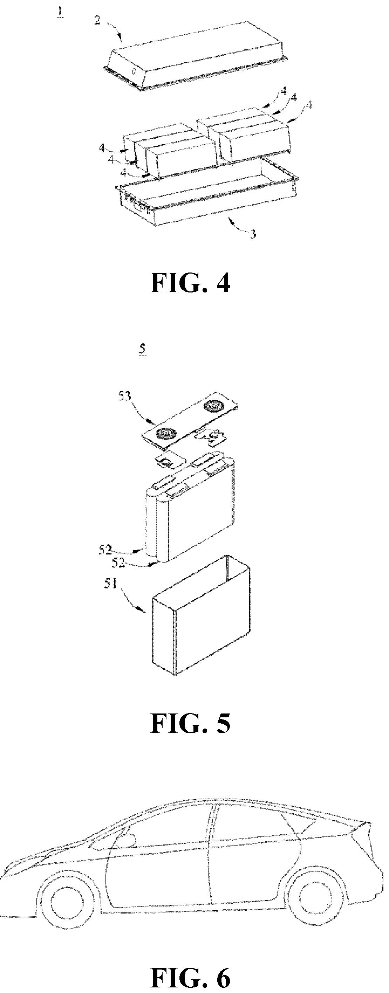

FIGS. 3 and 4 are schematic diagrams of a battery pack 1 as an example. As shown in FIGS. 3 and 4, the battery pack 1 may comprise a box body and a plurality of battery modules 4 arranged in the box body. The box body comprises an upper box 2 and a lower box 3. The upper box 2 is configured to cover the lower box 3 and form an enclosed space for accommodating the battery module 4. The plurality of battery modules 4 may be arranged in the box body in any manner.

The battery provided in embodiments of the present application may include a lithium-ion battery.

The battery cell comprises an electrode assembly and an electrolyte. The electrode assembly may be a winded structure or a stacked structure, which is not limited in the embodiments of the present application.

The battery cell may further comprise an outer package, which may be used to encapsulate the electrode assembly and the electrolyte. The outer package may be a hard shell, such as a hard plastic shell, an aluminum shell, or a steel shell. The outer package may also be a pouch, such as a bag-type pouch. The material of the pouch may be plastic, such as one or more of polypropylene (PP), polybutylene terephthalate (PBT), and polybutylene succinate (PBS).

In some embodiments, as shown in FIG. 5, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 is used to cover the opening to close the accommodating cavity. The electrode assembly 52 is encapsulated within the accommodating cavity. The number of electrode assemblies 52 comprised in the battery cell 5 may be one or more, and may be regulated based on requirements.

The electrode assembly generally comprises a positive electrode plate and a negative electrode plate. The negative electrode is the electrode where lithium ions are absorbed or intercalated during charging and released or de-intercalated during discharging. The positive electrode is the electrode where lithium ions are released or de-intercalated during charging and absorbed or intercalated during discharging. The positive electrode plate comprises a positive electrode active material, and the negative electrode plate comprises a negative electrode active material.

When the battery is charged, the electrochemical process that occurs at the negative electrode may be roughly divided into 3 steps as follows: (1) a liquid-phase conduction process of ions inside the porous negative electrode, including a liquid-phase diffusion process and an electromigration process; (2) a charge exchange process of ions on the surface of the negative electrode active material; and (3) a solid-phase conduction process of ions inside particles of the negative electrode active material.

Charge exchange capacity of the ions on the surface of the negative electrode active material is very important to achieve fast charging. Fast charging refers to charging a battery to a fully charged state or nearly fully charged state in a short period of time. If the battery is charged, and the duration of charging the battery from 0% SOC to 100% SOC is recorded, this duration can represent fast charge performance of the battery. The shorter the duration is, the better the fast charge capacity of the battery is. For example, the duration of about 20 min (the error is smaller than or equal to 1 min) is generally considered to be a 3C fast-charging battery. For another example, the duration of about 15 min (the error is smaller than or equal to 1 min) is generally considered to be a 4 C fast-charging battery.

At present, a commonly used negative electrode active material is graphite, but the kinetic performance of graphite is not excellent enough. Fast-charging hard carbon has good kinetic performance, but a battery assembled therefrom generally has low energy density, and has less excellent cycle life.

In view of this, an embodiment of the present application provides a negative electrode active material.

The negative electrode active material comprises an inner core and a coating layer located on at least a part of the surface of the inner core, the inner core comprises graphite, the coating layer comprises hard carbon; and in a cumulative distribution curve of R values of the negative electrode active material obtained under a surface scanning mode of a laser microscopic confocal Raman spectrometer, the R value R50, which corresponds to a cumulative distribution of 50%, from the lower limit is 0.15-0.40.

In the present application, R value of the negative electrode active material, the inner core, and the coating layer refers to a ratio of a peak height of a D peak (D-band) to a peak height of a G peak (G-band) of Raman spectrum thereof. The D peak is at a position of 1,350±50 cm⁻¹, and the G peak is at a position 1,585±50 cm⁻¹. The R value can represent a defect degree and a disorder degree of each carbon material. The larger the value is, the severer the defect degree and the higher the disorder degree of the carbon material are.

The Raman spectrum of each carbon material can be obtained by a laser microscopic confocal Raman spectrometer at a laser wavelength of 532 nm. During testing, all-round surface scan is performed on an appropriate amount of sample with a scanning area of 100 µm × 100 µm, a step size of 2 µm, and a total number of scanning points of 2,500 points, thereby obtaining all R values and a cumulative distribution curve of the R values. R50 is R value of 50% cumulative distribution from the lower limit. That is, the resulting 2,500 R values are arranged in ascending order, and the R50 is an R value corresponding to 50% number in order. The testing instrument may be a high-precision Renishaw laser microscopic confocal Raman spectrometer.

The negative electrode active material sample may be obtained by sampling during the preparation of the battery, or may be obtained by disassembling the sample from the resulting battery. For example, the battery cell may be discharged (for security, the battery cell is generally kept in a fully discharged state); after the battery cell is disassembled, the negative electrode plate is taken out, and immersed in dimethyl carbonate for a certain period of time (for example, 2 h-10 h); then the negative electrode plate is taken out, dried at a certain temperature for a certain duration (for example, 60°C, for more than 4 h), and then taken out; the dried negative electrode plate is baked at a certain temperature for a certain duration (for example, 400°C, more than 2 h), a region is optionally selected from the baked negative electrode plate, and the negative electrode active material is sampled (sampled by scraping powder using a blade); and the collected negative electrode active material is ground and sieved (for example, sieved through a 200-mesh sieve) to obtain the negative electrode active material sample usable for testing.

The inner core material sample may be obtained by sampling during the preparation of the negative electrode active material.

The R value of the coating layer and the concentration ratio of the R value refer to the performance of the hard carbon material itself formed by carbonization of the precursor compound used to prepare the coating layer material. The coating material sample can be obtained by: performing carbonization on an appropriate amount of the precursor compound used to prepare the coating layer material (such as the liquid-phase hard carbon coating agent below) under the same carbonization condition as the preparation of the coating layer of the negative electrode active material, and then grinding and sieving the resulting material to obtain the coating material sample.

The R value of the negative electrode active material can represent a defect degree and a disorder degree of the negative electrode active material. the R value R50, which corresponds to a cumulative distribution of 50%, of the negative electrode active material is associated with, e.g., an R value of 50% cumulative distribution of the inner core, an R value of 50% cumulative distribution of the coating layer, the thickness of the coating layer, and uniformity of the coating layer. For example, when other conditions are same, the inner core has a large R value of 50% cumulative distribution, the negative electrode active material has a large the R value R50, which corresponds to a cumulative distribution of 50%,; the coating layer has a large thickness, and the negative electrode active material has a large the R value R50, which corresponds to a cumulative distribution of 50%,.

The negative electrode active material has a large the R value R50, which corresponds to a cumulative distribution of 50%,, the negative electrode active material has a high defect degree, the ions on the surface of the negative electrode active material have fast charge exchange, the negative electrode active material has good kinetic performance, and during fast charging of the battery, the negative electrode does not tend to have a lithium plating problem. However, due to the high defect degree of the negative electrode active material, side reactions on the surface of the negative electrode active material, such as side reactions on the negative electrode-electrolyte solution interface, will increase, thereby increasing irreversible capacity losses, and reducing the capacity retention rate after cycles.
the R value R50, which corresponds to a cumulative distribution of 50%, of the negative electrode active material is 0.15-0.40, which not only can improve the charge exchange capacity of the ions on the surface of the negative electrode active material, but also can reduce side reactions on surfaces of particles of the negative electrode active material to a low level. Therefore, the negative electrode active material provided in embodiments of the present application can enable the battery to have high energy density, good kinetic performance, and good cycling performance.
the R value R50, which corresponds to a cumulative distribution of 50%, of the negative electrode active material may be 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40, or a range consisting of any of the above values.

Optionally, the R value R50, which corresponds to a cumulative distribution of 50%, of the negative electrode active material may be 0.20-0.39, 0.20-0.38, 0.20-0.37, 0.20-0.36, 0.20-0.35, 0.20-0.34, 0.20-0.33, 0.20-0.32, 0.20-0.31, or 0.20-0.30, thereby enabling the battery to better have high energy density, good kinetic performance, and good cycling performance.

The critical charging rate of the battery of the present application without lithium plating is larger than or equal to 3C, that is, the battery of the present application is a fast-charging battery of 3C or above, and the duration for charging the battery from 0%SOC to 100% SOC is within 20 min, which can meet current requirements for fast charging.

Further restricting the R values of the negative electrode active material, the inner core, and the coating layer can improve at least one of the energy density, the kinetic performance, and the cycling performance of the battery.

In some embodiments, among all of the obtained R values of the negative electrode active material, the proportion of the number of R values smaller than the R value R50, which corresponds to a cumulative distribution of 50%, of the inner core may be smaller than or equal to 10%.

Among all of the obtained R values of the negative electrode active material, the proportion of the number of R values smaller than the R value R50, which corresponds to a cumulative distribution of 50%, of the inner core can more accurately represent the uncoating degree of the negative electrode active material. The smaller the value is, the smaller the uncoating degree of the negative electrode active material is, and isotropy degree of the negative electrode active material is improved. In this case, the negative electrode active material has more active sites, and thus the ions on the surface of the negative electrode active material have better charge exchange capacity, thereby further improving the kinetic performance of the negative electrode active material and the battery. In addition, the small uncoating degree of the negative electrode active material can further reduce a co-intercalation phenomenon of the solvent in the electrolyte solution during cycling, and then can further enable the battery to have better cycling performance.

Optionally, among all of the obtained R values of the negative electrode active material, the proportion of the number of R values smaller than the R value R50, which corresponds to a cumulative distribution of 50%, of the inner core may be smaller than or equal to 8%, and more optionally smaller than or equal to 6%.

Therefore, the kinetic performance and the cycling performance of the battery are further improved.

In some embodiments, the R value R50, which corresponds to a cumulative distribution of 50%, of the inner core of the negative electrode active material is smaller than the R value R50, which corresponds to a cumulative distribution of 50%, of the coating layer.

A large the R value R50, which corresponds to a cumulative distribution of 50%, and a large disorder degree of the coating layer of the negative electrode active material can enable the negative electrode active material and the battery to have good kinetic performance; while a small the R value R50, which corresponds to a cumulative distribution of 50%, and a small disorder degree of the inner core of the negative electrode active material can enable the whole negative electrode active material to have high gram capacity, and enable the battery to have high energy density.
the R value R50, which corresponds to a cumulative distribution of 50%, of the coating layer may be 0.9-1.4, for example, may be 0.9, 0.95, 1.0, 1.05, 1.1, 1.15, 1.2, 1.25, 1.3, 1.4, or a range consisting of any of the above values. Optionally, the R value R50, which corresponds to a cumulative distribution of 50%, of the coating layer is 0.95-1.25. Within the above range of the R value R50, which corresponds to a cumulative distribution of 50%, of the coating layer, the coating layer itself has good kinetic performance, not only can improve the kinetic performance of the negative electrode active material and the battery; but also can further enable the negative electrode active material to have a small specific surface area, thereby reducing side reactions of the battery, and enabling the battery to have good cycling performance.

In some embodiments, the R value R50, which corresponds to a cumulative distribution of 50%, of the inner core may be 0.06-0.13, for example, may be 0.06, 0.07, 0.08, 0.09, 0.10, 0.11, 0.12, 0.13, or a range consisting of any of the above values.

The larger the R value R50, which corresponds to a cumulative distribution of 50%, of the inner core is, the better the kinetic performance of the negative electrode active material is; and the smaller the R value R50, which corresponds to a cumulative distribution of 50%, of the inner core is, the higher gram capacity of the negative electrode active material is. the R value R50, which corresponds to a cumulative distribution of 50%, of the inner core within the above range can enable the battery to have both high energy density and good kinetic performance.

In some embodiments, the mass of the coating layer may be 0.3%-4.5% of the mass of the inner core, for example, may be 0.3%, 0.6%, 0.8%, 1%, 1.2%, 1.4%, 1.6%, 1.8%, 2%, 2.4%, 2.8%, 3.2%, 3.6%, 4%, 4.5%, or a range consisting of any of the above values. Optionally, the mass of the coating layer may be 1%-3.2% of the mass of the inner core.
the mass of the coating layer will affect the thickness of the coating layer, and will further affect the R value R50, which corresponds to a cumulative distribution of 50%, of the negative electrode active material and the uncoating degree of the coating layer.

Coating the surface of the inner core with one coating layer can reduce the contact between the inner core and the electrolyte solution, thereby reducing the co-intercalation phenomenon of the solvent in the electrolyte solution during cycling, and improving the cycling performance of the battery; and when the thickness of the coating layer further increases, because the coating layer itself has more pores, the side reactions on the negative electrode-electrolyte solution interface increase, thereby increasing irreversible capacity losses, and declining the cycling performance the battery to a certain extent.

Mass proportion of the coating layer within the above range can reduce the uncoating degree of the coating layer, thereby improving the charge exchange capacity of the ions on the surface of the negative electrode active material, reducing the side reactions on the surfaces of particles of the negative electrode active material to a low level, and enabling the negative electrode active material to have high gram capacity. The mass proportion of the coating layer within the above range is conducive to enabling the battery to have high energy density, good kinetic performance, and long cycle life.

In some embodiments, a difference value between a volume distribution particle size Dv50 of the negative electrode active material and a volume distribution particle size Dv50 of the inner core may be 1 µm-5.5 µm, for example, may be 1 µm, 1.4 µm, 1.8 µm, 2.2 µm, 2.4 µm, 2.6 µm, 2.8 µm, 3 µm, 3.2 µm, 3.4 µm, 3.6 µm, 3.8 µm, 4 µm, 4.2 µm, 4.5 µm, 5 µm, 5.5 µm, or a range consisting of any of the above values. Optionally, the difference value between the volume distribution particle size Dv50 of the negative electrode active material and the volume distribution particle size Dv50 of the inner core may be 1.5 µm-4.2 µm, or 2 µm-4 µm.

The difference value between the volume distribution particle size Dv50 of the negative electrode active material and the volume distribution particle size Dv50 of the inner core within the above range not only can improve charge exchange capacity of the ions on the surface of the negative electrode active material, but also can reduce the side reactions on the surfaces of the particles of the negative electrode active material to a low level, and can further enable the negative electrode active material to have high gram capacity, which is thus conductive to enabling the battery to have high energy density, good kinetic performance, and long cycle life.

In some embodiments, the volume distribution particle size Dv50 of the negative electrode active material may be 8 µm-25 µm, and is optionally 12 µm-17 µm. The volume distribution particle size Dv50 of the negative electrode active material within the above range not only can enable lithium ions to have good solid-phase conductivity inside the particles of the negative electrode active material, but also can enable the negative electrode active material to have a small specific surface area, which is thus conductive to enabling the battery to have both good cycling performance and good kinetic performance. The volume distribution particle size Dv50 of the negative electrode active material within the above range can further enable the negative electrode slurry to have good dispersity.

The volume distribution particle size Dv50 of the material has a well-known meaning in the art, represents a corresponding particle size when a cumulative volume distribution percentage of the material reaches 50%, and may be measured using well-known instruments and methods in the art, for example, may be conveniently measured using a laser particle size analyzer with reference to GB/T 19077-2016 Particle size analysis-laser diffraction methods. The testing instrument may be a Mastersizer 3000 laser particle size analyzer of Malvern Instruments Ltd.

The graphite is artificial graphite. The inner core comprises artificial graphite, which enables the battery to have high energy density and good cycling performance.

In some embodiments, the graphite may have secondary particle morphology. When the graphite has secondary particle morphology, the isotropy degree of the graphite increases, which is conducive to fast intercalation of the lithium ions, is then conducive to enabling the battery to have good kinetic performance, and can further improve the gram capacity of the negative electrode active material and the energy density of the battery.

In some embodiments, an intensity ratio C(004)/C(110) of the 004 crystal plane diffraction peak to the 110 crystal plane diffraction peak of the graphite measured by X-ray diffraction may be 5.5-6.5.

The intensity ratio of the crystal plane diffraction peak 004 to the crystal plane diffraction peak 110 of the graphite measured by X-ray diffraction may represent the isotropy degree of the graphite. When this value is small, the graphite has high isotropy degree, and the graphite particles have lithium-ion intercalation sites in all directions, which are conducive to fast intercalation of lithium ions, and are then conducive to enabling the battery to have good kinetic performance.

As an example, the intensity ratio C(004)/C(110) of the crystal plane diffraction peak 004 to the crystal plane diffraction peak 110 of the graphite may be tested by X-ray diffraction using an X-ray diffractometer (such as Bruker D8 Discover) with reference to JIS K 0131-1996 and JB/T 4220-2011, to obtain an X-ray diffraction pattern of a powder sample. The C(004)/C(110) represents a ratio of an integral area of the crystal plane diffraction peak 004 to an integral area of the crystal plane diffraction peak 110 of crystalline carbon in the powder sample. In an analysis test by X-ray diffraction, a copper target may be used as an anode target with CuKα rays as a radiation source at a ray wavelength of λ=1.5418Å in a scanning 2θ angle range of 20°-80° at a scanning rate of 4°/min.

In some embodiments, the negative electrode active material may have a gram capacity of 354 mAh/g-361 mAh/g.

The gram capacity of the negative electrode active material may be obtained by assembling a button battery and performing a charge-discharge test. As an example, the negative electrode active material sample may be fully mixed with a conductive agent Super P and a binder polyvinylidene fluoride (PVDF) at a mass ratio of 91.6:1.8:6.6 in a solvent N-methylpyrrolidone (NMP) to prepare a slurry; the resulting slurry is coated on a copper foil current collector, then dried in a drying oven, and then cold pressed to compacted density controlled at 1.4 g/cm³-1.6 g/cm³; then, a metal lithium plate serves as a counter electrode, a polyethylene film serves as a separator, the electrolyte solution is injected, and a CR2430 button battery is assembled in an argon-protected glove box. A formula used for the electrolyte solution is as follows: ethylene carbonate (EC), ethyl methyl carbonate (EMC), and diethyl carbonate (DEC) are mixed at a volume ratio of 1:1:1, and then a fully dried lithium salt LiPF₆ is dissolved in the mixed solvent at a ratio of 1 mol/L to prepare the electrolyte solution. At 25°C, the resulting button battery is left to stand for 12 h, then discharged to 0.005 V at a constant current at 0.05C, left to stand for 10 min, then discharged to 0.005 V at a constant current of 50 µA, left to stand for 10 min, and then discharged to 0.005 V at a constant current of 10 µA. A sum of the three discharge capacities is used as a first-cycle discharge capacity of the button battery. Then, the battery is charged to 2.0 V at a constant current at 0.1C, to record a first-cycle charge capacity of the button battery. A ratio of the first-cycle charge capacity of the button battery to the mass of the negative electrode active material sample is the gram capacity of the negative electrode active material.

In some embodiments, the negative electrode active material may have a powder compacted density of 1.68 g/cm³-1.78 g/cm³ under a pressure of 20,000 N.

For example, an appropriate amount of negative electrode active material powder is placed in a special compaction mold, which is placed on a compacted density instrument set at different pressures, to read powder thicknesses under different pressures on the device (which are thicknesses after pressure relief here), and calculate powder compacted densities ρ of the negative electrode active material under the corresponding pressures as per ρ=m/(s*h). The pressure is set to 20,000 N. m represents the mass of the negative electrode active material powder sample, g. s is a bottom area of the special compaction mold, and is 1.327 cm² here. h is compacted thickness of the negative electrode active material powder sample, cm.

In some embodiments, the negative electrode active material may have a specific surface area of 1.5 m²/g-4.5 m²/g.

The specific surface area of the negative electrode active material within the above range can reduce the side reactions on the negative electrode-electrolyte solution interface, and reduce irreversible consumption of the lithium ions, thereby improving the cycle life of the battery.

The specific surface area of the material has a well-known meaning in the art, and may be measured using well-known instruments and methods in the art, for example, may be tested using the specific surface area analysis and test method by nitrogen adsorption with reference to GB/T 19587-2017, and calculated using the BET (Brunauer Emmett Teller) method, wherein the specific surface area analysis and test by nitrogen adsorption may be carried out using Tri-Star 3020 surface area and porosity analyzer of Micrometrics Instruments Corporation.

An embodiment of the present application further provides a method for preparing a negative electrode active material, which can be used to prepare the negative electrode active material provided in embodiments of the present application.

The preparation method includes the following steps: providing a coke raw material; crushing, shaping, and grading the coke raw material to obtain an aggregate; mixing the resulting aggregate with a binder, successively granulating and graphitizing the mixture to obtain graphite; performing solid-liquid fusion on the resulting graphite and a liquid-phase hard carbon coating agent; and carbonizing the solid-liquid fusion product in a protective gas atmosphere, so that the liquid-phase hard carbon coating agent is carbonized into hard carbon and coats at least a part of the surface of the graphite, to obtain a negative electrode active material. The negative electrode active material comprises an inner core and a coating layer located on at least a part of the surface of the inner core, the inner core comprises graphite, the coating layer comprises hard carbon; and in a cumulative distribution curve of R values of the negative electrode active material obtained under a surface scanning mode of a laser microscopic confocal Raman spectrometer, the R value R50, which corresponds to a cumulative distribution of 50%, from the lower limit is 0.15-0.40.

The particle size of the coke raw material is generally relatively large, and may be reduced by crushing. Optionally, the crushing may include two steps of coarse crushing and pulverization. Coarse crushing can break the coke raw material into millimeter-sized blocky particles. Pulverization can break the material from millimeter-sized particles to particles of tens of micrometers. After crushing, the coke raw material has unsmooth surfaces, and the coke raw material particles themselves can be more rounded by shaping. Grading can reduce the content of particles with too large sizes and particles with too small sizes, and can further regulate the particle size and particle size distribution of the coke raw material.

The coke raw material may comprise one or more of a petroleum-based needle coke and a coal-based needle coke. These coke raw materials are anisotropic materials, which are not only conductive to reducing the disorder degree of the inner core material and improving the gram capacity of the inner core material and the overall gram capacity of the negative electrode active material, but also conductive to improving the energy density of the battery.

In the preparation method provided in embodiments of the present application, solid-liquid fusion is performed on the graphite with a liquid-phase hard carbon coating agent. Because of having good fluidity, the liquid-phase hard carbon coating agent can be uniformly distributed on surfaces of graphite particles, thereby improving the coating effects of the coating layer, and reducing the uncoating degree; and the carbonized liquid-phase hard carbon coating agent can enable the negative electrode active material to have a small R50, thereby improving charge exchange capacity of ions on the surface of the negative electrode active material, and improving the kinetic performance of the negative electrode active material and the battery. Reducing the uncoating degree of the negative electrode active material can further reduce the side reactions on the surfaces of the particles of the negative electrode active material to a low level, and is then conductive to enabling the battery to have good cycling performance. Therefore, the negative electrode active material prepared using the preparation method provided in embodiments of the present application can enable the battery to have high energy density, good kinetic performance, and good cycling performance.

Optionally, the mass of the binder may be 6%-12%, optionally 8%-10%, of the mass of the aggregate obtained by grading. Therefore, the graphite can have good secondary particle morphology.

Optionally, the binder may include asphalt.

The device used for granulation may include any one of a horizontal reactor or a vertical reactor.

Optionally, the granulation process may adopt a stepped heating and temperature holding process. Therefore, the graphite can have good secondary particle morphology and high capacity.

Optionally, 2-4 programmed heating platforms may be set during the heating.

Generally, surfaces of coke raw materials in different batches and from different raw materials are uneven and has many defects. Graphitization can further significantly repair the surface defects of the materials, thereby resulting in good Raman value centrality under the surface scanning mode of the inner core material, and better performance consistency in finished product of the graphite.

The device used for graphitization may include any one of an Acheson graphitization furnace, a chamber furnace, or a lengthwise furnace.

Optionally, the graphitization temperature may be 2,800°C-3,800°C, for example, may be 2,800°C, 2,850°C, 2,900°C, 3,000°C, 3,100°C, 3,200°C, 3,300°C, 3,400°C, 3,500°C, 3,600°C, 3,700°C, 3,800°C, or a range consisting of any of the above values. More optionally, the graphitization temperature may be 2,850°C-3300°C. The specific graphitization duration may be reasonably selected based on an employed device.

Based on a high graphitization temperature and a long graphitization duration, the graphite has a high gram capacity, a small disorder degree, and a small the R value R50, which corresponds to a cumulative distribution of 50%, of the graphite.

An appropriate graphitization temperature is selected, thereby enabling the battery to have both high energy density and good kinetic performance.

In some embodiments, a coking value of the liquid-phase hard carbon coating agent may be 35%-50%, and is optionally 38%-48%.

The coking value of the liquid-phase hard carbon coating agent is a percentage of the mass of residual carbon left after a specified amount of the liquid phase hard carbon coating agent sample is heated under specified conditions in the mass of the liquid phase hard carbon coating agent sample, and may be tested with reference to GB/T 8727-2008.

In some embodiments, the mass of the liquid-phase hard carbon coating agent may be 0.7%-10% of the mass of the graphite, for example, may be 0.7%, 1%, 2%, 3%, 4%, 5%, 6%, 7%, 8%, 9%, 10%, or a range consisting of any of the above values. Optionally, the mass of the liquid-phase hard carbon coating agent may be 3%-7% of the mass of the graphite.

As the mass proportion of the liquid-phase hard carbon coating agent increases, the R value R50, which corresponds to a cumulative distribution of 50%, of the negative electrode active material increases, and the disorder degree on the surfaces of the particles of the negative electrode active material increases.

Mass proportion of the liquid-phase hard carbon coating agent within the above range can reduce the uncoating degree of the negative electrode active material to a small range, thereby improving the charge exchange capacity of the ions on the surface of the resulting negative electrode active material, reducing the side reactions on the surfaces of the particles of the resulting negative electrode active material to a low level, and further enabling the resulting negative electrode active material to have high gram capacity, which is conductive to enabling the battery to have high energy density, good kinetic performance, and long cycle life.

In some embodiments, the liquid-phase hard carbon coating agent includes a liquid resin, which is a hard carbon precursor material. When the coating layer comprises hard carbon, the negative electrode active material and the battery can have better kinetic performances.

The liquid resin may be purchased commercially or synthesized according to a method known in the art, or may be obtained by fully mixing the resin powder with a solvent.

In some embodiments, the liquid resin may have a viscosity at 25°C of 150 mPa·s-2,000 mPa·s, for example, 150 mPa·s, 200 mPa·s, 300 mPa·s, 400 mPa·s, 500 mPa·s, 600 mPa·s, 700 mPa·s, 800 mPa·s, 900 mPa·s, 1,050 mPa·s, 1,200 mPa·s, 1,400 mPa·s, 1,600 mPa·s, 1,800 mPa·s, 2,000 mPa·s, or a range consisting of any of the above values. Optionally, the liquid resin may have the viscosity of 300 mPa·s-900 mPa·s at 25°C.

The viscosity of the liquid resin may be tested with reference to GB/T 14074-2017 at a test temperature of 25°C using a test device of an NDJ-1 rotational viscometer.

The viscosity of the liquid resin within the above range can enable the liquid resin to have not only good fluidity and diffusivity, but also good curing effects and coating effects. Therefore, the liquid resin can be uniformly dispersed on the surfaces of the graphite particles, which is conductive to improving the coating effects, reducing the uncoating degree, and further improving the uniformity of coating on the surfaces of the graphite particles, and is then conductive to enabling the battery to have both good kinetic performance and long cycle life.

In some embodiments, solid content of the liquid resin may be 50%-85%, and is optionally 60%-82%.

Solid content of the liquid-phase hard carbon coating agent may be tested using a drying method with reference to GB/T 14074-2017. Free components and moisture in the liquid-phase hard carbon coating agent will volatilize at a high temperature. The solid content of the liquid-phase hard carbon coating agent refers to a percentage of residual mass after drying under specified conditions in a total mass. The drying oven is set to a temperature of 150°C for drying to a constant weight.

The solid content of the liquid resin within the above range can enable the liquid resin to have not only good fluidity and diffusivity, but also good curing effects and coating effects. Therefore, the liquid resin can be uniformly dispersed on the surfaces of the graphite particles, which is conductive to improving the coating effects, reducing the uncoating degree, further regulating the R value R50, which corresponds to a cumulative distribution of 50%, of the negative electrode active material, increasing the disorder degree on the surfaces of the particles of the negative electrode active material, and improving the charge exchange capacity of the ions on the surface of the negative electrode active material, and is then conductive to enabling the battery to have good kinetic performance and long cycle life.

In some embodiments, the liquid resin may include at least one of liquid phenolic resin, liquid epoxy resin, liquid vinyl ester resin, liquid unsaturated polyester resin, liquid furan resin, and respective derivatives thereof. The derivatives generally refer to products derived by replacing hydrogen atoms or atomic groups in polymers with other atoms or atomic groups.

The above liquid resin is a good hard carbon precursor material, can, as a liquid-phase hard carbon coating agent, better improve the kinetic performance of the battery, and can further enable the battery to have good cycling performance.

In some embodiments, the liquid-phase hard carbon coating agent comprises liquid phenolic resin, and the liquid phenolic resin may have a solid content of 60%-82% and a weight average molecular weight of 300-800.

Optionally, the liquid phenolic resin may have the solid content of 68%-78% and the weight average molecular weight of 450-700.

Compared to other liquid resins, the hard carbon formed by carbonization and coking of the liquid phenolic resin itself has better performance.

Further regulating the solid content and the weight average molecular weight of the liquid phenolic resin within the above range can enable the hard carbon formed by carbonization to have better kinetic performance, can further improve the coating effects, and can reduce the uncoating degree, thereby improving the charge exchange capacity of the ions on the surface of the negative electrode active material, and improving the kinetic performance of the negative electrode active material.

The weight average molecular weight of the liquid-phase hard carbon coating agent may be tested by gel permeation chromatography using a test instrument of an Agilent 1290 Infinity II GPC system. The eluent may be tetrahydrofuran, and polystyrene standard substance is used for calibration.

The liquid phenolic resin may be obtained by polycondensation of, e.g., a phenolic compound and an aldehyde compound in the presence of an alkali catalyst. The polycondensation reaction begins to generate a liquid substance. The liquid phenolic resin mentioned in an embodiment of the present application is a resol.

The phenolic compound may include one or more of phenol, cresol, dimethylphenol, nonylphenol, bisphenol A, bisphenol F, resorcinol, propylphenol, ethylphenol, and cardanol, and is optionally phenol. The aldehyde compound may include one or more of formaldehyde, acetaldehyde, butyraldehyde, polyformaldehyde, and furfural, and is optionally formaldehyde. The alkali catalyst may include one or more of sodium hydroxide, potassium hydroxide, barium hydroxide, calcium hydroxide, magnesium hydroxide, ammonia water, sodium carbonate, and tertiary amine.

**In** some embodiments, a device for performing solid-liquid fusion on the graphite and the liquid-phase hard carbon coating agent may be a fusion machine.

Optionally, a stirring speed of the fusion machine may be 350 r/min-1,000 r/min, for example, may be, 350 r/min, 400 r/min, 450 r/min, 500 r/min, 550 r/min, 600 r/min, 650 r/min, 700 r/min, 750 r/min, 800 r/min, 850 r/min, 900 r/min, 1,000 r/min, or a range consisting of any of the above values. More optionally, the stirring speed of the fusion machine may be 450 r/min-850 r/min.

Increasing the stirring speed of the fusion machine is conductive to improving the coating effects, and reducing the uncoating degree, thereby improving the charge exchange capacity of the ions on the surface of the negative electrode active material, and improving the kinetic performance of the negative electrode active material. However, a too large stirring speed of the fusion machine will damage outer surface structure of the inner core, and strong centrifugation will further cause weight losses of the liquid-phase hard carbon coating agent.

Optionally, a stirring duration of the solid-liquid fusion may be 4 min-10 min, for example, may be 4 min, 5 min, 6 min, 7 min, 8 min, 9 min, 10 min, or a range consisting of any of the above values. More optionally, the stirring duration of solid-liquid fusion may be 6 min-8 min.

Increasing the solid-liquid fusion stirring duration is conductive to improving the coating effects and reducing the uncoating degree, thereby improving the charge exchange capacity of the ions on the surface of the negative electrode active material, and improving the kinetic performance of the negative electrode active material. However, if the stirring duration is too long, the gain of improving the coating effects is not obvious, and energy consumption will further increase.

In some embodiments, a device for carbonization may be a track kiln.

In some embodiments, a holding temperature of the carbonization may be 900°C-1,500°C, for example, may be 900°C, 1,000°C, 1,050°C, 1,100°C, 1,150°C, 1,200°C, 1,250°C, 1,300°C, 1,350°C, 1,400°C °C, 1,500°C, or a range consisting of any of the above values. Optionally, the holding temperature of the carbonization may be 1,050°C-1,350°C.

In some embodiments, a temperature holding duration of the carbonization may be 2 h-10 h, for example, may be 2 h, 3 h, 4 h, 5 h, 6 h, 7 h, 8 h, 9 h, 10 h, or a range consisting of any of the above values. Optionally, the temperature holding duration of the carbonization may be 5 h-8 h. The temperature holding duration of the carbonization refers to a duration of stay at the holding temperature.

In some embodiments, the preparation method may further include a step of depolymerizing, sieving, and demagnetizing the carbonized material.

The depolymerization may be carried out in a depolymerization machine, to eliminate weak adhesion on the surface of the coating layer and reduce the problem of excessive agglomeration of the resulting finished product particles. The sieving can reduce the content of large particles and fine powder in the resulting finished product, thus contributing to obtainment of desired particle size and particle size distribution. The demagnetization can reduce the content of magnetic impurities in the resulting finished product. The magnetic impurities will increase self-discharge of the battery, and reduce the battery performance.

### [Negative electrode plate]

The battery cell comprises a negative electrode plate.

The negative electrode plate comprises a negative electrode current collector and a negative electrode film layer located on at least one surface of the negative electrode current collector. For example, the negative electrode current collector has two surfaces opposite in its own thickness direction, and the negative electrode film layer is arranged on either one or both of the two opposite surfaces of the negative electrode current collector.

**In** some embodiments, the negative electrode current collector may comprise a metal foil, a three-dimensional porous current collector, or a composite current collector. As an example of the metal foil, copper foil, copper alloy foil, nickel foil, nickel alloy foil, aluminum foil, or aluminum alloy foil may be used. As an example of the three-dimensional porous current collector, copper mesh, nickel mesh, copper foam, nickel foam, or aluminum foam may be used. The composite current collector may comprise a polymer material substrate layer and a metal material layer formed on at least one surface of the polymer material substrate layer. As an example, the metal material may include, but is not limited to, one or more of copper, copper alloy, nickel, nickel alloy, titanium, titanium alloy, aluminium, aluminum alloy, silver, and silver alloy. As an example, the polymer material substrate layer may include, but is not limited to, one or more of polypropylene (PP), polyethylene terephthalate (PET), polybutylene terephthalate (PBT), polystyrene (PS), and polyethylene (PE).

The negative electrode film layer includes the above negative electrode active material or the negative electrode active material prepared using the above preparation method, thereby enabling the battery to have high energy density, good kinetic performance, and good cycling performance.

In some embodiments, the negative electrode film layer may further include other well-known negative electrode active materials in the art, for example, the other negative electrode active materials include, but are not limited to, one or more of natural graphite, artificial graphite, soft carbon, hard carbon, silicon matrix material, tin matrix material, and lithium titanate.

In some embodiments, the negative electrode film layer further optionally comprises a negative electrode conductive agent. As an example, the negative electrode conductive agent may include, but is not limited to, one or more of superconducting carbon, conductive graphite, acetylene black, carbon black, Ketjen black, carbon dot, carbon nanotube, graphene, or carbon nanofiber.

In some embodiments, the negative electrode film layer further optionally comprises a negative electrode binder. As an example, the negative electrode binder may include, but is not limited to, one or more of styrene butadiene rubber (SBR), water soluble unsaturated resin SR-1B, waterborne acrylic acid resin (e.g., polyacrylic acid (PAA), polymethacrylic acid (PMAA), or sodium polyacrylate (PAAS)), polyacrylamide (PAM), polyvinyl alcohol (PVA), sodium alginate (SA), or carboxymethyl chitosan (CMCS).

In some embodiments, the negative electrode film layer further optionally comprises other adjuvants. As an example, the other adjuvants may include, but are not limited to, a thickener, e.g., sodium carboxymethyl cellulose (CMC) or a PTC thermistor material.

In some embodiments, the thickness of the negative electrode film layer may be 45 µm-100 µm, and is optionally 55 µm-100 µm, 70 µm-100 µm. The thickness of the negative electrode film layer is thickness of the negative electrode film layer on one side of the negative electrode current collector. The thickness of the negative electrode film layer may be measured with a myriadmeter.

The thickness of the negative electrode film layer is associated with intercalation speed of the ions and polarization magnitude of the negative electrode, so that magnitude of its thickness will affect the kinetic performance of the negative electrode plate. Generally, the thicker the negative electrode film layer is, the more difficult it is for the ions to diffuse in the liquid phase inside the porous negative electrode under equivalent conditions.

Regulating the thickness of the negative electrode film layer within the above range is conducive to enabling the battery to have better kinetic performance under the premise of having high energy density.

In some embodiments, the negative electrode film layer comprises a first negative electrode film layer and a second negative electrode film layer located between the first negative electrode film layer and the negative electrode current collector, the thickness of the first negative electrode film layer is 30%-60% of the thickness of the negative electrode film layer, and thickness of the second negative electrode film layer is 70%-40% of the thickness of the negative electrode film layer. Optionally, the thickness of the first negative electrode film layer is 30%-40% of the thickness of the negative electrode film layer, and the thickness of the second negative electrode film layer is 70%-60% of the thickness of the negative electrode film layer.

The first negative electrode film layer comprises a first negative electrode active material, the second negative electrode film layer comprises a second negative electrode active material, and the first negative electrode active material includes the above negative electrode active material or the negative electrode active material prepared using the above preparation method, thereby enabling the battery to have high energy density, good kinetic performance, and good cycling performance.

Optionally, in some embodiments, the second negative electrode active material may include the above negative electrode active material or the negative electrode active material prepared using the above preparation method, mass content w1 of the first negative electrode active material in the first negative electrode film layer is larger than the mass content w2 of the second negative electrode active material in the second negative electrode film layer, and mass content of the negative electrode binder in the first negative electrode film layer is smaller than mass content of the negative electrode binder in the second negative electrode film layer.

During slurry drying, the negative electrode binder will float, so that content of the negative electrode binder on an outer surface of the negative electrode film layer increases, which is not conducive to liquid-phase conduction of the ions inside the porous negative electrode and charge exchange of the ions on the surface of the negative electrode active material.

The negative electrode film layer is zoned, the mass content w1 of the first negative electrode active material in the first negative electrode film layer is larger than the mass content w2 of the second negative electrode active material in the second negative electrode film layer, and the mass content of the negative electrode binder in the first negative electrode film layer is smaller than the mass content of the negative electrode binder in the second negative electrode film layer, thereby reducing the problem of the negative electrode binder floating during slurry drying, and reducing the content of the negative electrode binder on the outer surface of the negative electrode film layer, which is thus conductive to liquid-phase conduction of the ions inside the porous negative electrode and charge exchange of the ions on the surface of the negative electrode active material, and then can further improve the kinetic performance of the battery.

Optionally, mass content w1 of the second negative electrode active material in the first negative electrode film layer may be larger than or equal to 96.9%, and is optionally 96.9%-97.4%.

Optionally, the mass content w2 of the second negative electrode active material in the second negative electrode film layer may be smaller than 96.9%, and is optionally 96.4%-96.8%.

In some alternative embodiments, the second negative electrode active material may include graphite, which has secondary particle morphology, and has an the R value R50, which corresponds to a cumulative distribution of 50%, of 0.06-0.13. The second negative electrode active material may be the inner core of the negative electrode active material provided in the above embodiments of the present application, that is, graphite. The second negative electrode active material does not have a coating layer, thereby enabling the battery to have higher energy density.

Optionally, the mass content w1 of the first negative electrode active material in the first negative electrode film layer is larger than the mass content w2 of the second negative electrode active material in the second negative electrode film layer, and the mass content of the negative electrode binder in the first negative electrode film layer is smaller than the mass content of the negative electrode binder in the second negative electrode film layer.

The negative electrode film layer is zoned, the mass content w1 of the first negative electrode active material in the first negative electrode film layer is larger than the mass content w2 of the second negative electrode active material in the second negative electrode film layer, and the mass content of the negative electrode binder in the first negative electrode film layer is smaller than the mass content of the negative electrode binder in the second negative electrode film layer, thereby reducing the problem of the negative electrode binder floating during slurry drying, and reducing the content of the negative electrode binder on the outer surface of the negative electrode film layer, which is thus conductive to liquid-phase conduction of the ions inside the porous negative electrode and charge exchange of the ions on the surface of the negative electrode active material, and then can further improve the kinetic performance of the battery.

Optionally, mass content w1 of the second negative electrode active material in the first negative electrode film layer may be larger than or equal to 96.9%, and is optionally 96.9%-97.4%.

Optionally, the mass content w2 of the second negative electrode active material in the second negative electrode film layer may be smaller than 96.9%, and is optionally 96.4%-96.8%.

In some embodiments, compacted density of the negative electrode film layer may be 1.62 g/cm³-1.80 g/cm³, and is optionally 1.65 g/cm³-1.80 g/cm³. The negative electrode active material provided in the embodiments of the present application or the negative electrode active material prepared using the preparation method provided in the embodiments of the present application can enable the negative electrode film layer to have high compacted density.

Compacted density of negative electrode film layer refers to a ratio of surface density of the negative electrode film layer to thickness of the negative electrode film layer. The surface density of the negative electrode film layer refers to a ratio of weight to coating area of the negative electrode film layer that is coated, dried, and rolled.

The negative electrode film layer is generally formed by coating a negative electrode slurry on the negative electrode current collector, followed by drying and cold pressing. The negative electrode slurry is generally formed by dispersing the negative electrode active material, the negative electrode conductive agent, the negative electrode binder, and the other optional adjuvants in a solvent, and fully stirring the mixture. The solvent may be, but is not limited to, N-methylpyrrolidone (NMP) or deionized water.

The negative electrode plate does not exclude other additional functional layers except for the negative electrode film layer. For example, in some embodiments, the negative electrode plate may further comprise a conductive priming coat (e.g., composed of a conductive agent and a binder) sandwiched between the negative electrode current collector and the negative electrode film layer and arranged on the surface of the negative electrode current collector; and in some embodiments, the negative electrode plate may further comprise a protective layer covering on the surface of the negative electrode film layer.

### [Positive electrode plate]

The battery cell comprises a positive electrode plate.

The positive electrode plate comprises a positive electrode current collector and a positive electrode film layer arranged on at least one surface of the positive electrode current collector. For example, the positive electrode current collector has two surfaces opposite in its own thickness direction, and the positive electrode film layer is arranged on either one or both of the two opposite surfaces of the positive electrode current collector.

The positive electrode film layer comprises a positive electrode active material. For example, the positive electrode active material may include, but is not limited to, one or more of a lithium transition metal oxide, a lithium-containing phosphate, and respective modified compounds thereof.

As an example, the lithium transition metal oxide may include, but is not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. In some embodiments, the lithium transition metal oxide may include LiₐNi_{b}Co_{c}M_{d}OₑA_{f}, wherein 0<a≤1.2; 0.8≤b<1; 0<c<1; 0<d<1; 1≤e≤2; 0≤f≤1; M includes, but is not limited to, one or more of Mn, Al, Zr, Zn, Cu, Cr, Mg, Fe, V, Ti, and B; and A includes, but is not limited to, one or more of N, F, S, and Cl, thereby further improving the energy density of the battery cell. Optionally, the lithium transition metal oxide may include, but is not limited to, one or more of LiNi_{0.8}Co_{0.1}Mn_{0.1}O₂, LiNi_{0.80}Co_{0.15}Al_{0.05}O₂, LiNi_{0.9}Co_{0.06}Mn_{0.04}O₂, LiNi_{0.92}Co_{0.06}Mn_{0.02}O₂, or LiNi_{0.96}Co_{0.02}Mn_{0.02}O₂.

During charging and discharging, the battery cell will be accompanied by deintercalation and consumption of Li, and molar content of Li in the battery cell is different when it is discharged to different states. In the enumeration of positive electrode active materials in the embodiments of the present application, the molar content of Li is an initial state of the material, that is, a state before feeding. The positive electrode active material is used in the battery cell. After charge-discharge cycles, the molar content of Li may change.

In the enumeration of positive electrode active materials in the embodiments of the present application, molar content of O is only a theoretical state value. The release of oxygen from the crystal lattice will cause the molar content of O to change, and the actual molar content of O will fluctuate.

As an example, the lithium-containing phosphate may include, but is not limited to, one or more of lithium iron phosphate, lithium iron phosphate-carbon composite, lithium manganese phosphate, lithium manganese phosphate-carbon composite, lithium manganese iron phosphate, lithium manganese iron phosphate-carbon composite, and respective modified compounds thereof.

The modified compound of each of the above positive electrode active materials may be obtained by doping modification and/or surface coating modification of the positive electrode active material.

In some embodiments, the positive electrode film layer further optionally comprises a positive electrode conductive agent. As an example, the positive electrode conductive agent may include, but is not limited to, one or more of superconducting carbon, conductive graphite, acetylene black, carbon black, Ketjen black, carbon dot, carbon nanotube, graphene, or carbon nanofiber.

In some embodiments, the positive electrode film layer further optionally comprises a positive electrode binder. As an example, the positive electrode binder may include, but is not limited to, one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylate resin, styrene butadiene rubber (SBR), water soluble unsaturated resin SR-1B, waterborne acrylic acid resin (e.g., polyacrylic acid (PAA), polymethacrylic acid (PMAA), or sodium polyacrylate (PAAS)), polyacrylamide (PAM), polyvinyl alcohol (PVA), sodium alginate (SA), or carboxymethyl chitosan (CMCS).

In some embodiments, the positive electrode current collector may be a metal foil or a composite current collector. As an example of the metal foil, an aluminum foil may be used. The composite current collector may comprise a polymer material substrate layer and a metal material layer formed on at least one surface of the polymer material substrate layer. As an example, the metal material may include, but is not limited to, one or more of aluminium, aluminum alloy, nickel, nickel alloy, titanium, titanium alloy, silver, and silver alloy. As an example, the polymer material substrate layer may include, but is not limited to, one or more of polypropylene (PP), polyethylene terephthalate (PET), polybutylene terephthalate (PBT), polystyrene (PS), and polyethylene (PE).

The positive electrode film layer is generally formed by coating a positive electrode slurry on the positive electrode current collector, followed by drying and cold pressing. The positive electrode slurry is generally formed by dispersing the positive electrode active material, the positive electrode conductive agent, the positive electrode binder and any other components in a solvent, and fully stirring the mixture. The solvent may be, but is not limited to, N-methylpyrrolidone (NMP).

### [Electrolyte]

The battery cell comprises an electrolyte. The type of the electrolyte is not specifically limited in the present application, and may be selected according to requirements. For example, the electrolyte may include one or more of a solid electrolyte and a liquid electrolyte (i.e., an electrolyte solution).

In some embodiments, the electrolyte is an electrolyte solution, which comprises an electrolyte salt and a solvent.

In some embodiments, as an example, the electrolyte salt may include, but is not limited to, one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluorobis(oxalato)phosphate (LiDFOP), and lithium tetrafluoro(oxalato)phosphate (LiTFOP).

In some embodiments, the solvent may include, but is not limited to, one or more of an ester solvent, a sulfone solvent, and an ether solvent. As an example, the solvent may include, but is not limited to, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolyte solution further optionally comprises an additive. For example, the additive may include a negative electrode film-forming additive, or may include a positive electrode film-forming additive, or may further include an additive that can improve some performance of the battery, such as an additive that improves overcharge performance of the battery, an additive that improves high-temperature performance of the battery, or an additive that improves low-temperature power performance of the battery.

### [Separator]

A battery cell using an electrolyte solution and some battery cells using a solid electrolyte further comprise a separator. The separator is provided between the positive electrode plate and the negative electrode plate, and mainly functions to prevent internal short circuit.

The type of the separator is not particularly limited in the present application, and any well-known porous-structured separator having good chemical stability and mechanical stability may be selected.

In some embodiments, the material of the separator may include, but is not limited to, one or more glass fiber, non-woven cloth, polyethylene (PE), polypropylene (PP), and polyvinylidene fluoride. The separator may be a single-layer film, or may be a multilayer composite film. When the separator is a multilayer composite film, the materials in each layer may be identical or different.

The method for preparing a battery cell is well known. In some embodiments, the positive electrode plate, the separator, the negative electrode plate, and the electrolyte solution may be assembled to form the battery cell. As an example, the positive electrode plate, the separator, and the negative electrode plate may be made into an electrode assembly by a winding process and/or a stacking process. The electrode assembly is placed in an outer package, and dried, the electrolyte solution is injected therein, and the battery cell is obtained through the processes, such as encapsulation, standing, and formation. A plurality of battery cells may be further connected by series connection or parallel connection or parallel-series connection to form a battery module. A plurality of battery modules may be further connected by series connection or parallel connection or parallel-series connection to form a battery pack. In some embodiments, the plurality of battery cells may further directly form a battery pack.

### Electrical apparatus

An embodiment of the present application further provides an electrical apparatus, comprising the battery provided in the embodiments of the present application, wherein the battery is configured to provide electrical energy. The battery may be used as a power source of the electrical apparatus, or may be used as an energy storage unit of the electrical apparatus. The electrical apparatus may be, but is not limited to, a mobile device (such as a mobile phone, a tablet, or a laptop), an electric vehicle (such as an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

A specific type of battery, such as a battery cell, a battery module, or a battery pack, may be selected for the electrical apparatus based on use demand thereof.

FIG. 6 is a schematic diagram of an electrical apparatus as an example. The electrical apparatus is, e.g., an all-electric vehicle, a hybrid electric vehicle, or a plug-in hybrid electric vehicle. In order to meet the requirements of the electrical apparatus for high power and high energy density, a battery pack or a battery module may be used.

As another example, the electrical apparatus may be a mobile phone, a tablet, a laptop, etc. The electrical apparatus is generally required to be thin and light, and may use a battery cell as a power source.

### Examples

The following examples describe the disclosure of the present application in more detail and are provided for illustrative purposes only, as various modifications and alterations within the scope of the disclosure of the present application will be apparent to those skilled in the art. Unless otherwise stated, all parts, percentages, and ratios reported in the following examples are on a mass basis; all reagents used in the examples are commercially available or are synthesized according to conventional methods, and can be directly used without further treatment; and all instruments used in the examples are commercially available.

### Example 1

### (1) Preparation of a negative electrode active material

The petroleum-based needle coke was crushed, shaped, and graded to obtain an aggregate; the resulting aggregate and a binder asphalt were mixed at a mass ratio of 100:8, and the mixture was transferred to a horizontal reactor for granulation by heating. Stepped heating and temperature holding process was adopted for the heating, and programmed heating platforms were set at 200°C, 300°C, and 600°C respectively, i.e., at a constant temperature of 200°C for 1 h, at a constant temperature of 300°C for 2 h, and at a constant temperature of 600°C for 2 h. After cooling for 3 h, the granulated material was discharged from the furnace, and placed in an Acheson graphitization furnace for graphitization at 3,000°C for about 50 h to obtain graphite.

A fusion machine was used to perform solid-liquid fusion at a stirring speed of 600 r/min on the graphite and a liquid-phase hard carbon coating agent at a mass ratio of 100:5 for a stirring duration of 7 min, wherein the liquid-phase hard carbon coating agent was a commercially available liquid phenolic resin with a weight average molecular weight of 580, a viscosity at 25°C of 550 mPa·s, and a solid content of 70%-71%. The solid-liquid fusion product was placed in a track kiln, heated to 1,150°C in a nitrogen atmosphere for carbonization, kept at this temperature for 6 h, then cooled to 50°C, then discharged from the furnace, depolymerized, sieved, and demagnetized, to obtain the negative electrode active material.

### (2) Preparation of a negative electrode plate

The above negative electrode active material, a thickener sodium carboxymethyl cellulose, a negative electrode binder styrene butadiene rubber (SBR), and a negative electrode conductive agent Super P were mixed at a mass ratio of 97.3 :1.1 :0.8:0.8, a solvent deionized water was added, and the mixture was fully stirred under the action of a vacuum stirrer to prepare a first negative electrode slurry.

The negative electrode active material, the thickener sodium carboxymethyl cellulose, the negative electrode binder styrene butadiene rubber (SBR), and the negative electrode conductive agent Super P mentioned above were mixed at a mass ratio of 96.5:1.1:2.0:0.4, a solvent deionized water was added, and the mixture was fully stirred under the action of a vacuum stirrer to prepare a second negative electrode slurry.

The second negative electrode slurry was uniformly coated on both surfaces of a negative electrode current collector copper foil, and the first negative electrode slurry was coated on the second negative electrode slurry. The negative electrode current collector coated with the slurry was air dried at room temperature, then transferred to a drying oven for drying, and then cold-pressed and cut to obtain the negative electrode plate. Thickness of a negative electrode film layer on one side of the negative electrode current collector is 58 µm. A ratio of coating thickness of the first negative electrode slurry to coating thickness of the second negative electrode slurry is 4:6.

### (3) Preparation of a positive electrode plate

A positive electrode active material LiNi_{0.8}Co_{0.1}Mn_{0.1}O₂, a positive electrode conductive agent Super P, and a positive electrode binder polyvinylidene fluoride (PVDF) were mixed at a mass ratio of 96:2:2, a solvent N-methylpyrrolidone (NMP) was added, and the mixture was stirred under the action of a vacuum stirrer until the system became uniform and transparent, to obtain a positive electrode slurry. The positive electrode slurry was uniformly coated on both surfaces of a positive electrode current collector aluminum foil. The positive electrode current collector coated with the slurry was air dried at room temperature, then transferred to a drying oven for drying, and then cold-pressed and cut to obtain the positive electrode plate.

### (4) Preparation of an electrolyte solution

Ethylene carbonate (EC), ethyl methyl carbonate (EMC), and diethyl carbonate (DEC) were mixed at a volume ratio of 1:1:1, and then a fully dried lithium salt LiPF₆ was dissolved in the mixed solvent at a ratio of 1 mol/L to prepare the electrolyte solution.

### (5) Preparation of a separator

A polyethylene film of 12 µm was used.

### (6) Preparation of a battery (full battery)

The positive electrode plate, the separator, and the negative electrode plate were sequentially stacked, such that the separator was located between the positive electrode plate and the negative electrode plate to function for separation, and then winded to obtain an electrode assembly. The electrode assembly was placed in an outer package, and the above resulting electrolyte solution was injected into a dried electrode assembly. The battery was obtained through the processes, such as vacuum encapsulation, standing, formation, and shaping.

### Comparative Example 1

The process for preparing a battery is same as that of Example 1 except for the preparation process of the negative electrode active material.

### (1) Preparation of a negative electrode active material

The petroleum-based needle coke was crushed, shaped, and graded to obtain an aggregate; the resulting aggregate and a binder asphalt were mixed at a mass ratio of 100:8, and the mixture was transferred to a horizontal reactor for granulation by heating. Stepped heating and temperature holding process was adopted for the heating, and programmed heating platforms were set at 200°C, 300°C, and 600°C respectively, i.e., at a constant temperature of 200°C for 1 h, at a constant temperature of 300°C for 2 h, and at a constant temperature of 600°C for 2 h. After cooling for 3 h, the granulated material was discharged from the furnace, placed in an Acheson graphitization furnace for graphitization at 3,000°C for about 50 h, and then sieved and demagnetized to obtain the negative electrode active material.

### Comparative Example 2

The process for preparing a battery is same as that of Example 1 except for the preparation process of the negative electrode active material.

### (1) Preparation of a negative electrode active material

The petroleum-based needle coke was crushed, shaped, and graded to obtain an aggregate; the resulting aggregate and a binder asphalt were mixed at a mass ratio of 100:8, and the mixture was transferred to a horizontal reactor for granulation by heating. Stepped heating and temperature holding process was adopted for the heating, and programmed heating platforms were set at 200°C, 300°C, and 600°C respectively, i.e., at a constant temperature of 200°C for 1 h, at a constant temperature of 300°C for 2 h, and at a constant temperature of 600°C for 2 h. After cooling for 3 h, the granulated material was discharged from the furnace, and placed in an Acheson graphitization furnace for graphitization at 2,850°C for 45 h to obtain graphite.

A VC stirrer was used to perform solid-solid stirring on the graphite and a solid-phase coating agent at a mass ratio of 100:5, wherein the solid-phase coating agent was asphalt with a softening point of 270°C. The solid-solid mixing product was placed in a track kiln, heated to 1,150°C in a nitrogen atmosphere for carbonization, kept at this temperature for 6 h, then cooled to 50°C, then discharged from the furnace, depolymerized, sieved, and demagnetized, to obtain the negative electrode active material.

### Performance test of a liquid-phase hard carbon coating agent

Viscosity of the liquid-phase hard carbon coating agent was tested with reference to GB/T 14074-2017 at a test temperature of 25°C using a test device of an NDJ-1 rotational viscometer.

Solid content of the liquid-phase hard carbon coating agent was tested using a drying method with reference to GB/T 14074-2017. The drying oven was set to a temperature of 150°C for drying to a constant weight.

### Testing

### (1) Raman spectrum test of the negative electrode active material

The testing instrument is a high-precision Renishaw laser microscopic confocal Raman spectrometer at a laser wavelength of 532 nm.

During testing, all-round surface scan was performed on an appropriate amount of a negative electrode active material sample with a scanning area of 100 µm×100 µm, a step size of 2 µm, and a total number of scanning points of 2500 points, thereby obtaining R values at different positions and a cumulative distribution curve of the R values. The R value refers to a ratio of a peak height of a D peak to a peak height of a G peak of Raman spectrum. The D peak is at a position of 1,350±50 cm⁻¹, and the G peak is at a position of 1,585±50 cm⁻¹. R50 is R value of 50% cumulative distribution from the lower limit.

Raman spectrum test of graphite and a coating material was carried out using a method similar to the above. The coating material sample can be obtained by: performing carbonization on an appropriate amount of a liquid-phase hard carbon coating agent or a solid-phase coating agent under same carbonization condition as that in the examples and the comparative examples, and then grinding and sieving the resulting material to obtain the coating material sample.

Among all of the obtained R values of the negative electrode active material, the proportion of the number of R values smaller than the R value R50, which corresponds to a cumulative distribution of 50%, of the graphite is denoted as an uncoating degree X of the negative electrode active material.

### (2) Mass energy density test of the battery

At 25°C, each of the batteries prepared in the examples and the comparative examples was fully charged at a rate of 0.33C and fully discharged at a rate of 0.33C. After three times of charge and discharge, actual discharge energy D0 of the battery was recorded, and the battery charge and discharge voltages ranged from 2.5 V to 4.25 V. At 25°C, the battery was weighed using an electronic balance. A ratio of the actual discharge energy D0 of the battery to mass of the battery is mass energy density of the battery.

### (3) Cycling performance test of the battery

At 35°C, each of the batteries prepared in the examples and the comparative examples was fully charged at a rate of 1C and fully discharged at a rate of 0.5C, and the charge-discharge cycles were repeated. The battery charge and discharge voltages ranged from 2.5 V to 4.25 V. Cycling performance of the battery is characterized by a capacity retention rate of the battery after 2,000 cycles. The higher the value is, the better the cycling performance of the battery is. Capacity retention rate of the battery after 2,000 cycles=discharge capacity after 2,000 cycles/discharge capacity after first cycle.

### (4) Critical charging rate test of the battery

At 25°C, each of the batteries prepared in the examples and the comparative examples was fully charged at an equivalent charging rate of xC, and fully discharged at 1C. After 10 cycles, the battery was fully charged at an equivalent charging rate of xC, and the negative electrode plate was disassembled, to observe lithium plating on the surface. The battery charge and discharge voltages ranged from 2.5 V to 4.25 V. In case of no lithium plating on the surface of the negative electrode, the above test was performed with the equivalent charging rate of xC increasing in a gradient of 0.1C until lithium plating on the surface of the negative electrode. The test was stopped, the charging rate of xC in this case was recorded, and (x-0.1)C was denoted as a critical charging rate of the battery.

**Table 1**

| Serial No. | Test result of negative electrode active material | Battery test result |
|---|---|---|
| | R50 | Critical charging rate |
| Example 1 | 0.24 | 4.0C |
| Comparative example 1 | 0.08 | 2.8C |

As can be seen from the test results of Example 1 and Comparative Example 1, a coating layer was provided on the surface of the graphite, and the R value R50, which corresponds to a cumulative distribution of 50%, of the coated negative electrode active material was larger than 0.15, so that the battery can have a higher critical charging rate, thereby enabling the battery to have better fast charge performance.

**Table 2**

| Serial No. | Test result of negative electrode active material | | Battery test result | |
|---|---|---|---|---|
| | R50 | uncoating degree X | Mass energy density (Wh/Kg) | Capacity retention rate after 2,000 cycles |
| Example 1 | 0.24 | 6% | 240.3 | 80.0% |
| Comparative example 2 | 0.45 | 15% | 237.3 | 75.0% |

As can be seen from the test result in Table 2, compared with the negative electrode active material prepared using the solid-phase coating agent in Comparative Example 2, the use of the liquid-phase hard carbon coating agent in Example 1 can reduce the R value R50, which corresponds to a cumulative distribution of 50%, of the negative electrode active material, thereby enabling the battery to have not only better fast charge performance but also higher cycling capacity retention rate.

As can also be seen from the test result in Table 2, compared with the negative electrode active material prepared using the solid-phase coating agent in Comparative Example 2, the use of the liquid-phase hard carbon coating agent in Example 1 can further enable the battery to have higher energy density.

### Example 2

The process for preparing a battery is same as that of Example 1 except for the preparation process of the negative electrode active material.

### (1) Preparation of a negative electrode active material

The petroleum-based needle coke was crushed, shaped, and graded to obtain an aggregate; the resulting aggregate and a binder asphalt were mixed at a mass ratio of 100:8, and the mixture was transferred to a horizontal reactor for granulation by heating. Stepped heating and temperature holding process was adopted for the heating, and programmed heating platforms were set at 200°C, 300°C, and 600°C respectively, i.e., at a constant temperature of 200°C for 1 h, at a constant temperature of 300°C for 2 h, and at a constant temperature of 600°C for 2 h. After cooling for 3 h, the granulated material was discharged from the furnace, and placed in an Acheson graphitization furnace for graphitization at 3,200°C for about 55 h to obtain graphite.

A fusion machine was used to perform solid-liquid fusion at a stirring speed of 600 r/min on the graphite and a liquid-phase hard carbon coating agent at a mass ratio of 100:5 for a stirring duration of 7 min, wherein the liquid-phase hard carbon coating agent was a commercially available liquid phenolic resin with a weight average molecular weight of 580, a viscosity at 25°C of 550 mPa·s, and a solid content of 70%-71%. The solid-liquid fusion product was placed in a track kiln, heated to 1, 150°C in a nitrogen atmosphere for carbonization, kept at this temperature for 6 h, then cooled to 50°C, then discharged from the furnace, depolymerized, sieved, and demagnetized, to obtain the negative electrode active material.

### Example 3

The process for preparing a battery is same as that of Example 1 except for the preparation process of the negative electrode active material.

### (1) Preparation of a negative electrode active material

The petroleum-based needle coke was crushed, shaped, and graded to obtain an aggregate; the resulting aggregate and a binder asphalt were mixed at a mass ratio of 100:8, and the mixture was transferred to a horizontal reactor for granulation by heating. Stepped heating and temperature holding process was adopted for the heating, and programmed heating platforms were set at 200°C, 300°C, and 600°C respectively, i.e., at a constant temperature of 200°C for 1 h, at a constant temperature of 300°C for 2 h, and at a constant temperature of 600°C for 2 h. After cooling for 3 h, the granulated material was discharged from the furnace, and placed in an Acheson graphitization furnace for graphitization at 2,850°C for about 45 h to obtain graphite.

A fusion machine was used to perform solid-liquid fusion at a stirring speed of 600 r/min on the graphite and a liquid-phase hard carbon coating agent at a mass ratio of 100:5 for a stirring duration of 7 min, wherein the liquid-phase hard carbon coating agent was a commercially available liquid phenolic resin with a weight average molecular weight of 580, a viscosity at 25°C of 550 mPa·s, and a solid content of 70%-71%. The solid-liquid fusion product was placed in a track kiln, heated to 1, 150°C in a nitrogen atmosphere for carbonization, kept at this temperature for 6 h, then cooled to 50°C, then discharged from the furnace, depolymerized, sieved, and demagnetized, to obtain the negative electrode active material.

**Table 3**

| Serial No. | Graphitization parameters | | R50 of graphite | Test result of negative electrode active material | | Battery test result | | |
|---|---|---|---|---|---|---|---|---|
| | Temperature (°C) | Duration (h) | | R50 | uncoating degree X | Mass energy density (Wh/Kg) | Capacity retention rate after 2,000 cycles | Critical charging rate |
| Example 1 | 3000 | 50 | 0.08 | 0.24 | 6% | 240.3 | 80.0% | 4.0C |
| Example 2 | 3200 | 55 | 0.06 | 0.23 | 6% | 241.4 | 77.6% | 3.5C |
| Example 3 | 2850 | 45 | 0.13 | 0.30 | 6% | 239.7 | 81.5% | 4.0C |

As can be seen from the test result in Table 3, when other conditions were same, the preparation process of the inner core graphite was regulated, thereby regulating the R value R50, which corresponds to a cumulative distribution of 50%, of the negative electrode active material.

As can also be seen from the test result in Table 3, when the R value R50, which corresponds to a cumulative distribution of 50%, of the negative electrode active material increases under the same uncoating degree of the negative electrode active material, the fast charge performance of the battery is improved.

### Example 4

The process for preparing a battery is same as that of Example 1 except for the preparation process of the negative electrode active material.

### (1) Preparation of a negative electrode active material

The petroleum-based needle coke was crushed, shaped, and graded to obtain an aggregate; the resulting aggregate and a binder asphalt were mixed at a mass ratio of 100:8, and the mixture was transferred to a horizontal reactor for granulation by heating. Stepped heating and temperature holding process was adopted for the heating, and programmed heating platforms were set at 200°C, 300°C, and 600°C respectively, i.e., at a constant temperature of 200°C for 1 h, at a constant temperature of 300°C for 2 h, and at a constant temperature of 600°C for 2 h. After cooling for 3 h, the granulated material was discharged from the furnace, and placed in an Acheson graphitization furnace for graphitization at 3,000°C for about 50 h to obtain graphite.

A fusion machine was used to perform solid-liquid fusion at a stirring speed of 600 r/min on the graphite and a liquid-phase hard carbon coating agent at a mass ratio of 100:3 for a stirring duration of 7 min, wherein the liquid-phase hard carbon coating agent was a commercially available liquid phenolic resin with a weight average molecular weight of 580, a viscosity at 25°C of 550 mPa·s, and a solid content of 70%-71%. The solid-liquid fusion product was placed in a track kiln, heated to 1, 150°C in a nitrogen atmosphere for carbonization, kept at this temperature for 6 h, then cooled to 50°C, then discharged from the furnace, depolymerized, sieved, and demagnetized, to obtain the negative electrode active material.

### Example 5

The process for preparing a battery is same as that of Example 1 except for the preparation process of the negative electrode active material.

### (1) Preparation of a negative electrode active material

The petroleum-based needle coke was crushed, shaped, and graded to obtain an aggregate; the resulting aggregate and a binder asphalt were mixed at a mass ratio of 100:8, and the mixture was transferred to a horizontal reactor for granulation by heating. Stepped heating and temperature holding process was adopted for the heating, and programmed heating platforms were set at 200°C, 300°C, and 600°C respectively, i.e., at a constant temperature of 200°C for 1 h, at a constant temperature of 300°C for 2 h, and at a constant temperature of 600°C for 2 h. After cooling for 3 h, the granulated material was discharged from the furnace, and placed in an Acheson graphitization furnace for graphitization at 3,000°C for about 50 h to obtain graphite.

A fusion machine was used to perform solid-liquid fusion at a stirring speed of 600 r/min on the graphite and a liquid-phase hard carbon coating agent at a mass ratio of 100:7 for a stirring duration of 7 min, wherein the liquid-phase hard carbon coating agent was a commercially available liquid phenolic resin with a weight average molecular weight of 580, a viscosity at 25°C of 550 mPa·s, and a solid content of 70%-71%. The solid-liquid fusion product was placed in a track kiln, heated to 1, 150°C in a nitrogen atmosphere for carbonization, kept at this temperature for 6 h, then cooled to 50°C, then discharged from the furnace, depolymerized, sieved, and demagnetized, to obtain the negative electrode active material.

### Example 6

The process for preparing a battery is same as that of Example 1 except for the preparation process of the negative electrode active material.

### (1) Preparation of a negative electrode active material

The petroleum-based needle coke was crushed, shaped, and graded to obtain an aggregate; the resulting aggregate and a binder asphalt were mixed at a mass ratio of 100:8, and the mixture was transferred to a horizontal reactor for granulation by heating. Stepped heating and temperature holding process was adopted for the heating, and programmed heating platforms were set at 200°C, 300°C, and 600°C respectively, i.e., at a constant temperature of 200°C for 1 h, at a constant temperature of 300°C for 2 h, and at a constant temperature of 600°C for 2 h. After cooling for 3 h, the granulated material was discharged from the furnace, and placed in an Acheson graphitization furnace for graphitization at 3,000°C for about 50 h to obtain graphite.

A fusion machine was used to perform solid-liquid fusion at a stirring speed of 600 r/min on the graphite and a liquid-phase hard carbon coating agent at a mass ratio of 100:10 for a stirring duration of 7 min, wherein the liquid-phase hard carbon coating agent was a commercially available liquid phenolic resin with a weight average molecular weight of 580, a viscosity at 25°C of 550 mPa·s, and a solid content of 70%-71%. The solid-liquid fusion product was placed in a track kiln, heated to 1, 150°C in a nitrogen atmosphere for carbonization, kept at this temperature for 6 h, then cooled to 50°C, then discharged from the furnace, depolymerized, sieved, and demagnetized, to obtain the negative electrode active material.

### Example 7

The process for preparing a battery is same as that of Example 1 except for the preparation process of the negative electrode active material.

### (1) Preparation of a negative electrode active material

The petroleum-based needle coke was crushed, shaped, and graded to obtain an aggregate; the resulting aggregate and a binder asphalt were mixed at a mass ratio of 100:8, and the mixture was transferred to a horizontal reactor for granulation by heating. Stepped heating and temperature holding process was adopted for the heating, and programmed heating platforms were set at 200°C, 300°C, and 600°C respectively, i.e., at a constant temperature of 200°C for 1 h, at a constant temperature of 300°C for 2 h, and at a constant temperature of 600°C for 2 h. After cooling for 3 h, the granulated material was discharged from the furnace, and placed in an Acheson graphitization furnace for graphitization at 3,000°C for about 50 h to obtain graphite.

A fusion machine was used to perform solid-liquid fusion at a stirring speed of 600 r/min on the graphite and a liquid-phase hard carbon coating agent at a mass ratio of 100:0.7 for a stirring duration of 7 min, wherein the liquid-phase hard carbon coating agent was a commercially available liquid phenolic resin with a weight average molecular weight of 580, a viscosity at 25°C of 550 mPa·s, and a solid content of 70%-71%. The solid-liquid fusion product was placed in a track kiln, heated to 1,150°C in a nitrogen atmosphere for carbonization, kept at this temperature for 6 h, then cooled to 50°C, then discharged from the furnace, depolymerized, sieved, and demagnetized, to obtain the negative electrode active material.

**Table 4**

| Serial No. | Mass of graphite:mass of liquid-phase hard carbon coating agent | Test result of negative electrode active material | | | Battery test result | | |
|---|---|---|---|---|---|---|---|
| | | R50 | uncoating degree X | Mass of coating layer:mass of inner core | Mass energy density (Wh/Kg) | Capacity retention rate after 2,000 cycles | Critical charging rate |
| Comparative Example 1 | 100:0 | 0.08 | - | 0:100 | 241.3 | 82.5% | 2.8C |
| Example 1 | 100:5 | 0.24 | 6% | 2.2:100 | 240.3 | 80.0% | 4.0C |
| Example 4 | 100:3 | 0.20 | 8% | 1.3:100 | 240.5 | 82.0% | 3.3C |
| Example 5 | 100:7 | 0.30 | 4% | 3.1:100 | 238.7 | 78.1% | 4.2C |
| Example 6 | 100:10 | 0.35 | 10% | 4.5:100 | 238.0 | 76.0% | 3.5C |
| Example 7 | 100:0.7 | 0.15 | 10% | 0.31:100 | 241.0 | 83.5% | 3.0C |

As can be seen from the test result in Table 4, when other conditions were same, the mass ratio of the graphite to the liquid-phase hard carbon coating agent was regulated, thereby regulating the R value R50, which corresponds to a cumulative distribution of 50%, of the negative electrode active material and the uncoating degree of the negative electrode active material.

As can also be seen from the test result in Table 4, when the mass ratio of the graphite to the liquid-phase hard carbon coating agent is between 100:3 and 100:7, the battery can better have high energy density, high cycling capacity retention rate, and high critical charge rate.

As can also be seen from the test result in Table 4, as the mass of the liquid-phase hard carbon coating agent increases, the cycling performance of the battery will be further improved initially, and as the mass of the liquid-phase hard carbon coating agent further increases, the cycling performance of the battery will show a downtrend. This is because when the mass of the liquid-phase hard carbon coating agent is small, a thin coating layer is formed. In this case, the coating layer can function to reduce the solvent co-intercalation phenomenon, thereby improving the cycling performance of the battery; and as the mass of the liquid-phase hard carbon coating agent continuously increases, the thickness of the coating layer becomes larger. Due to a large number of pores and a plurality of side reactions in the coating layer, the cycling performance of the battery will show a downtrend.

### Example 8

The process for preparing a battery is same as that of Example 1 except for the preparation process of the negative electrode active material.

### (1) Preparation of a negative electrode active material

The petroleum-based needle coke was crushed, shaped, and graded to obtain an aggregate; the resulting aggregate and a binder asphalt were mixed at a mass ratio of 100:8, and the mixture was transferred to a horizontal reactor for granulation by heating. Stepped heating and temperature holding process was adopted for the heating, and programmed heating platforms were set at 200°C, 300°C, and 600°C respectively, i.e., at a constant temperature of 200°C for 1 h, at a constant temperature of 300°C for 2 h, and at a constant temperature of 600°C for 2 h. After cooling for 3 h, the granulated material was discharged from the furnace, and placed in an Acheson graphitization furnace for graphitization at 3,000°C for about 50 h to obtain graphite.

A fusion machine was used to perform solid-liquid fusion at a stirring speed of 600 r/min on the graphite and a liquid-phase hard carbon coating agent at a mass ratio of 100:5 for a stirring duration of 7 min, wherein the liquid-phase hard carbon coating agent was a commercially available liquid phenolic resin with a weight average molecular weight of 800, a viscosity at 25°C of 2,000 mPa·s, and a solid content of 70%-71%. The solid-liquid fusion product was placed in a track kiln, heated to 1,150°C in a nitrogen atmosphere for carbonization, kept at this temperature for 6 h, then cooled to 50°C, then discharged from the furnace, depolymerized, sieved, and demagnetized, to obtain the negative electrode active material.

**Table 5**

| Serial No. | Liquid-phase hard carbon coating agent | | R50 of coating material | Test result of negative electrode active material | | Battery test result |
|---|---|---|---|---|---|---|
| | Weight average molecular weight | Viscosity (mPa · s) | | R50 | uncoating degree X | Critical charging rate |
| Example 1 | 580 | 550 | 1.10 | 0.24 | 6% | 4.0C |
| Example 8 | 800 | 2000 | 1.18 | 0.28 | 10% | 3.6C |

As can be seen from the test result in Table 5, when other conditions are same, the weight average molecular weight and/or the viscosity of the liquid-phase hard carbon coating agent were/was regulated, thereby regulating the R value R50, which corresponds to a cumulative distribution of 50%, of the negative electrode active material and the uncoating degree of the negative electrode active material. The weight average molecular weight and/or the viscosity of the liquid-phase hard carbon coating agent within an appropriate range can enable the negative electrode active material to have a smaller uncoating degree, and enable the battery to have a higher critical charging rate, thereby enabling the battery to have better fast charge performance.

### Example 9

The process for preparing a battery is same as that of Example 1 except for the preparation process of the negative electrode active material.

### (1) Preparation of a negative electrode active material

The petroleum-based needle coke was crushed, shaped, and graded to obtain an aggregate; the resulting aggregate and a binder asphalt were mixed at a mass ratio of 100:8, and the mixture was transferred to a horizontal reactor for granulation by heating. Stepped heating and temperature holding process was adopted for the heating, and programmed heating platforms were set at 200°C, 300°C, and 600°C respectively, i.e., at a constant temperature of 200°C for 1 h, at a constant temperature of 300°C for 2 h, and at a constant temperature of 600°C for 2 h. After cooling for 3 h, the granulated material was discharged from the furnace, and placed in an Acheson graphitization furnace for graphitization at 3,000°C for about 50 h to obtain graphite.

A fusion machine was used to perform solid-liquid fusion at a stirring speed of 350 r/min on the graphite and a liquid-phase hard carbon coating agent at a mass ratio of 100:5 for a stirring duration of 7 min, wherein the liquid-phase hard carbon coating agent was a commercially available liquid phenolic resin with a weight average molecular weight of 580, a viscosity at 25°C of 550 mPa·s, and a solid content of 70%-71%. The solid-liquid fusion product was placed in a track kiln, heated to 1, 150°C in a nitrogen atmosphere for carbonization, kept at this temperature for 6 h, then cooled to 50°C, then discharged from the furnace, depolymerized, sieved, and demagnetized, to obtain the negative electrode active material.

### Example 10

The process for preparing a battery is same as that of Example 1 except for the preparation process of the negative electrode active material.

### (1) Preparation of a negative electrode active material

The petroleum-based needle coke was crushed, shaped, and graded to obtain an aggregate; the resulting aggregate and a binder asphalt were mixed at a mass ratio of 100:8, and the mixture was transferred to a horizontal reactor for granulation by heating. Stepped heating and temperature holding process was adopted for the heating, and programmed heating platforms were set at 200°C, 300°C, and 600°C respectively, i.e., at a constant temperature of 200°C for 1 h, at a constant temperature of 300°C for 2 h, and at a constant temperature of 600°C for 2 h. After cooling for 3 h, the granulated material was discharged from the furnace, and placed in an Acheson graphitization furnace for graphitization at 3,000°C for about 50 h to obtain graphite.

A fusion machine was used to perform solid-liquid fusion at a stirring speed of 600 r/min on the graphite and a liquid-phase hard carbon coating agent at a mass ratio of 100:5 for a stirring duration of 5 min, wherein the liquid-phase hard carbon coating agent was a commercially available liquid phenolic resin with a weight average molecular weight of 580, a viscosity at 25°C of 550 mPa·s, and a solid content of 70%-71%. The solid-liquid fusion product was placed in a track kiln, heated to 1,150°C in a nitrogen atmosphere for carbonization, kept at this temperature for 6 h, then cooled to 50°C, then discharged from the furnace, depolymerized, sieved, and demagnetized, to obtain the negative electrode active material.

**Table 6**

| Serial No. | Solid-liquid fusion parameters | | Test result of negative electrode active material | | Battery test result |
|---|---|---|---|---|---|
| | Stirring speed | Stirring duration | R50 | uncoating degree X | Critical charging rate |
| Example 1 | 600 r/min | 7 min | 0.24 | 6% | 4.0C |
| Example 9 | 350 r/min | 7 min | 0.25 | 12% | 3.5C |
| Example 10 | 600 r/min | 5 min | 0.24 | 8% | 3.8C |

As can be seen from the test result in Table 6, when other conditions were same, the solid-liquid fusion parameters of the graphite and the liquid-phase hard carbon coating agent were regulated, thereby regulating the uncoating degree of the negative electrode active material. The solid-liquid fusion parameters of the graphite and the liquid-phase hard carbon coating agent within an appropriate range can enable the negative electrode active material to have a smaller uncoating degree. When other conditions are same, the negative electrode active material has a small uncoating degree, thereby enabling the battery to have a higher critical charging rate, and enabling the battery to have better fast charge performance.

### Example 11

The process for preparing a battery is same as that of Example 1 except for the preparation process of the negative electrode plate.

### (2) Preparation of a negative electrode plate

The negative electrode active material prepared in Example 1, a thickener sodium carboxymethyl cellulose, a negative electrode binder styrene butadiene rubber (SBR), and a negative electrode conductive agent Super P were mixed at a mass ratio of 96.9:1.1:1.5:0.5, a solvent deionized water was added, and the mixture was fully stirred under the action of a vacuum stirrer to prepare a negative electrode slurry.

The negative electrode slurry was uniformly coated on both surfaces of a negative electrode current collector copper foil. The negative electrode current collector coated with the slurry was air dried at room temperature, then transferred to a drying oven for drying, and then cold-pressed and cut to obtain the negative electrode plate. Thickness of a negative electrode film layer on one side of the negative electrode current collector is 58 µm.

**Table 7**

| Serial No. | Critical charging rate |
|---|---|
| Example 1 | 4.0C |
| Example 11 | 3.6C |

As can be seen from the test result in Table 7, the negative electrode film layer is zoned, the mass content of the first negative electrode active material in the first negative electrode film layer is larger than the mass content of the second negative electrode active material in the second negative electrode film layer, and the mass content of the negative electrode binder in the first negative electrode film layer is smaller than the mass content of the negative electrode binder in the second negative electrode film layer, so that the battery can have a higher critical charging rate, thereby enabling the battery to have better fast charge performance. This is because the above arrangements can reduce the problem of the negative electrode binder floating during slurry drying, thereby reducing the content of the negative electrode binder on an outer surface of the negative electrode film layer, which is thus conductive to liquid-phase conduction of ions inside a porous negative electrode and charge exchange of the ions on the surface of the negative electrode active material, and then can enable the battery to have better fast charge performance.

It should be noted that the present application is not limited to the above embodiments. The above embodiments are examples only, and any embodiment that has substantially the same constitutions and has the same effects as the technical ideas within the scope of the technical solutions of the present application is encompassed within the technical scope of the present application. In addition, without departing from the scope of the subject matter of the present application, various modifications that can be conceived of by those skilled in the art and are applied to the embodiments, and other embodiments constructed by combining some of the constituent elements of the embodiments are also encompassed within the scope of the present application.

## Claims

1. A lithium-ion battery, comprising one or more battery cells, the battery cell comprising a negative electrode plate, wherein
the negative electrode plate comprises a negative electrode current collector and a negative electrode film layer located on at least one surface of the negative electrode current collector, the negative electrode film layer comprises a negative electrode active material, the negative electrode active material comprises an inner core and a coating layer located on at least a part of the surface of the inner core, the inner core comprises graphite, the coating layer comprises hard carbon; and in a cumulative distribution curve of R values of the negative electrode active material obtained under a surface scanning mode of a laser microscopic confocal Raman spectrometer, the R value R50, which corresponds to a cumulative distribution of 50%, from the lower limit is 0.15-0.40.

2. The lithium-ion battery according to claim 1, wherein the R value R50, which corresponds to a cumulative distribution of 50%, of the negative electrode active material is 0.20-0.30.

3. The lithium-ion battery according to any one of claims 1-2, wherein, among all obtained R values of the negative electrode active material, the proportion of the number of R values smaller than the R value R50, which corresponds to a cumulative distribution of 50%, of the inner core is smaller than or equal to 10%.

4. The lithium-ion battery according to claim 3, wherein among all the obtained R values of the negative electrode active material, the proportion of the number of R values smaller than the R value R50, which corresponds to a cumulative distribution of 50%, of the inner core is smaller than or equal to 6%.

5. The lithium-ion battery according to any one of claims 1-4, wherein
the R value R50, which corresponds to a cumulative distribution of 50%, of the inner core is smaller than the R value R50, which corresponds to a cumulative distribution of 50%, of the coating layer; and/or
the R value R50, which corresponds to a cumulative distribution of 50%, of the coating layer is 0.9-1.4; and/or
the R value R50, which corresponds to a cumulative distribution of 50%, of the inner core is 0.06-0.13.

6. The lithium-ion battery according to any one of claims 1-5, wherein the mass of the coating layer is 0.3%-4.5% of the mass of the inner core.

7. The lithium-ion battery according to any one of claims 1-6, wherein the mass of the coating layer is 1%-3.2% of the mass of the inner core.

8. The lithium-ion battery according to any one of claims 1-7, wherein
a difference value between a volume distribution particle size Dv50 of the negative electrode active material and a volume distribution particle size Dv50 of the inner core is 1 µm-5.5 µm; and/or
the volume distribution particle size Dv50 of the negative electrode active material is 8 µm-25 µm.

9. The lithium-ion battery according to claim 8, wherein
the difference value between the volume distribution particle size Dv50 of the negative electrode active material and the volume distribution particle size Dv50 of the inner core is 1.5 µm-4.2 µm; and/or
the volume distribution particle size Dv50 of the negative electrode active material is 12 µm-17 µm.

10. The lithium-ion battery according to any one of claims 1-9, wherein
the graphite is artificial graphite; and/or
the graphite has secondary particle morphology; and/or
an intensity ratio C(004)/C(110) of the 004 crystal plane diffraction peak to the 110 crystal plane diffraction peak of the graphite measured by X-ray diffraction is 5.5-6.5; and/or
the negative electrode active material has a gram capacity of 354 mAh/g-361 mAh/g; and/or the negative electrode active material has a powder compacted density of 1.68 g/cm³-1.78 g/cm³ under a pressure of 20,000 N; and/or
the negative electrode active material has a specific surface area of 1.5 m²/g-4.5 m²/g.

11. The lithium-ion battery according to any one of claims 1-10, wherein the negative electrode film layer comprises a first negative electrode film layer and a second negative electrode film layer located between the first negative electrode film layer and the negative electrode current collector, the thickness of the first negative electrode film layer is 30%-60% of the thickness of the negative electrode film layer, the first negative electrode film layer comprises a first negative electrode active material, the second negative electrode film layer comprises a second negative electrode active material, and the first negative electrode active material comprises the negative electrode active material according to any one of claims 1-10.

12. The lithium-ion battery according to claim 11, wherein the second negative electrode active material comprises the negative electrode active material according to any one of claims 1-10, and the mass content w1 of the first negative electrode active material in the first negative electrode film layer is larger than the mass content w2 of the second negative electrode active material in the second negative electrode film layer; and/or, the mass content w1 of the first negative electrode active material in the first negative electrode film layer is larger than or equal to 96.9%, and the mass content w2 of the second negative electrode active material in the second negative electrode film layer is smaller than 96.9%.

13. The lithium-ion battery according to claim 11, wherein the second negative electrode active material comprises graphite, the graphite has secondary particle morphology, and the R value R50, which corresponds to a cumulative distribution of 50%, of the graphite is 0.06-0.13.

14. The lithium-ion battery according to claim 13, wherein the mass content w1 of the first negative electrode active material in the first negative electrode film layer is larger than the mass content w2 of the second negative electrode active material in the second negative electrode film layer; and/or, the mass content w1 of the first negative electrode active material in the first negative electrode film layer is larger than or equal to 96.9%, and the mass content w2 of the second negative electrode active material in the second negative electrode film layer is smaller than 96.9%.

15. The lithium-ion battery according to any one of claims 1-14, wherein the compacted density of the negative electrode film layer is 1.62 g/cm³-1.80 g/cm³; and/or, the thickness of the negative electrode film layer is 45 µm-100 µm.

16. The lithium-ion battery according to claim 15, wherein the compacted density of the negative electrode film layer is 1.65 g/cm³-1.80 g/cm³; and/or, the thickness of the negative electrode film layer is 70 µm-100 µm.

17. An electrical apparatus, comprising the lithium-ion battery according to any one of claims 1-16, wherein the lithium-ion battery is configured to provide electrical energy.

18. A negative electrode active material, comprising an inner core and a coating layer located on at least a part of the surface of the inner core, wherein the inner core comprises graphite, the coating layer comprises hard carbon; and in a cumulative distribution curve of R values of the negative electrode active material obtained under a surface scanning mode of a laser microscopic confocal Raman spectrometer, the R value R50, which corresponds to a cumulative distribution of 50%, from the lower limit is 0.15-0.40.

19. A method for preparing a negative electrode active material, comprising steps of:
providing a coke raw material;
crushing, shaping, and grading the coke raw material to obtain an aggregate;
mixing the resulting aggregate with a binder, successively granulating and graphitizing the mixture to obtain graphite;
performing solid-liquid fusion on the resulting graphite and a liquid-phase hard carbon coating agent; and
carbonizing the solid-liquid fusion product in a protective gas atmosphere, so that the liquid-phase hard carbon coating agent is carbonized into hard carbon and coats at least a part of the surface of the graphite, to obtain a negative electrode active material, wherein
the negative electrode active material comprises an inner core and a coating layer located on at least a part of the surface of the inner core, the inner core comprises graphite, the coating layer comprises hard carbon; and in a cumulative distribution curve of R values of the negative electrode active material obtained under a surface scanning mode of a laser microscopic confocal Raman spectrometer, the R value R50, which corresponds to a cumulative distribution of 50%, from the lower limit is 0.15-0.40.

20. The preparation method according to claim 19, wherein
the coke raw material comprises one or more of a petroleum-based needle coke and a coal-based needle coke; and/or
the graphitization is at a temperature of 2,800°C-3,800°C; and/or
the mass of the liquid-phase hard carbon coating agent is 0.7%-10% of the mass of the graphite.

21. The preparation method according to claim 20, wherein
the graphitization is at a temperature of 2,850°C-3,300°C; and/or
the mass of the liquid-phase hard carbon coating agent is 3%-7% of the mass of the graphite.

22. The preparation method according to any one of claims 19-21, wherein the liquid-phase hard carbon coating agent comprises a liquid resin with a viscosity of 150 mPa·s-2,000 mPa·s at 25°C and a solid content of 50%-85%.

23. The preparation method according to claim 22, wherein the liquid resin has a viscosity of 300 mPa·s-900 mPa·s at 25°C and a solid content of 60%-82%.

24. The preparation method according to any one of claims 22-23, wherein the liquid resin comprises at least one of liquid phenolic resin, liquid epoxy resin, liquid vinyl ester resin, liquid unsaturated polyester resin, liquid furan resin, and respective derivatives thereof.

25. The preparation method according to claim 24, wherein the liquid-phase hard carbon coating agent comprises liquid phenolic resin, and the liquid phenolic resin has a solid content of 60%-82% and a weight average molecular weight of 300-800.

26. The preparation method according to claim 25, wherein the liquid phenolic resin has a solid content of 68%-78% and a weight average molecular weight of 450-700.

27. The preparation method according to any one of claims 19-26, wherein
a device for performing solid-liquid fusion on the graphite and the liquid-phase hard carbon coating agent is a fusion machine at a stirring speed of 350 r/min-1,000 r/min for a solid-liquid fusion stirring duration of 4 min-10 min; and /or
the carbonization is performed at a holding temperature of 900°C-1,500°C; and/or
the carbonization is performed for a temperature holding duration of 2 h-10 h.

28. The preparation method according to claim 27, wherein the fusion machine is at a stirring speed of 450 r/min-850 r/min for a solid-liquid fusion stirring duration of 6 min-8 min.

29. A negative electrode plate, comprising a negative electrode current collector and a negative electrode film layer located on at least one surface of the negative electrode current collector, wherein the negative electrode film layer comprises a negative electrode active material, the negative electrode active material comprises an inner core and a coating layer located on at least a part of the surface of the inner core, the inner core comprises graphite, the coating layer comprises hard carbon; and in a cumulative distribution curve of R values of the negative electrode active material obtained under a surface scanning mode of a laser microscopic confocal Raman spectrometer, the R value R50, which corresponds to a cumulative distribution of 50%, from the lower limit is 0.15-0.40.
